# EUROPÄISCHE PATENTSCHRIFT

(11) **EP 0 646 223 B1**
(45) Veröffentlichungstag und Bekanntmachung des Hinweises auf die Patenterteilung: **15.05.1996**
(21) Anmeldenummer: 93912915.1
(22) Anmeldetag: 08.06.1993
(51) Int. Cl.: F16C 29/06, B23Q 1/26

(54) **FÜHRUNG EINES OBJEKTS AUF EINEM SCHIENENTISCH MITTELS EINER GRUPPE VON ROLLENDEN SCHIENENLAUFELEMENTEN**
GUIDING OF AN OBJECT ON A SYSTEM OF RAILS BY MEANS OF A GROUP OF ROLLING ELEMENTS RUNNING ON RAILS
GUIDAGE D'UN OBJET SUR UN SYSTEME A RAILS AU MOYEN D'UN GROUPE D'ELEMENTS ROULANT SUR DES RAILS

(30) Priorität: 12.06.1992 DE 4219340
(43) Veröffentlichungstag der Anmeldung: 05.04.1995
(73) Patentinhaber: Deutsche Star GmbH, D-97424 Schweinfurt (DE)
(72) Erfinder: BLAUROCK, Werner, D-8721 Niederwerrn (DE); SCHLERETH, Rudolf, D-8736 Frauenroth (DE); WEHRHAHN, Ulrich, D-8700 Würzburg (DE); ALBERT, Ernst, D-8729 Sand/Main (DE); BLAUROCK, Günter, D-8721 Niederwerrn (DE)
(74) Vertreter: Weickmann, Heinrich, Dipl.-Ing.
(86) Internationale Anmeldenummer: EP9301443
(87) Internationale Veröffentlichungsnummer: WO9325823

(56) Entgegenhaltungen:
- EP-A- 0 391 072
- EP-A- 0 393 201
- EP-A- 0 422 419
- EP-A- 0 472 167
- DE-A- 3 245 124
- DE-U- 8 910 548
- FR-A- 2 449 227
- GB-A- 2 164 708
- GB-A- 2 164 709
- US-A- 5 013 164

## Beschreibung

Die Erfindung betrifft eine Linearführungseinrichtung für die Führung eines Objekts, umfassend ein Schienensystem und eine - mindestens ein Gruppenmitglied umfassende - erste Teilgruppe von objektführenden, für die Führungspräzision des Objekts primär verantwortlichen, Schienenlaufelementen - im folgenden genannt führende Schienenlaufelemente - , welche in einer Laufrichtung auf ihnen zugeordneten Rollbahnen des Schienensystems durch an den führenden Schienenlaufelementen gelagerte Rollkörperschleifen geführt sind, wobei zwischen dem Objekt und dem Schienensystem weiterhin eine - mindestens ein Gruppenmitglied umfassende - zweite Teilgruppe von an dem Schienensystem geführten und mit dem Objekt verbundenen primär für die Dämpfung von quer zur Laufrichtung gerichteten Schwingungen bestimmten Dämpfungselementen vorgesehen ist, welche von den führenden Schienenlaufelementen hinsichtlich des inneren Aufbaus und/oder der Einbauverhältnisse zwischen dem Objekt und dem Schienensystem verschieden sind.

Das zu führende Objekt kann beliebige Form haben und beliebigen Zwecken dienen. Insbesondere kann das zu führende Objekt als Tisch einer Werkzeugmaschine ausgebildet sein, welcher seinerseits zum Befestigen von Werkzeugen oder Werkstücken ausgebildet sein kann. Weiterhin kann das zu führende Objekt von einem Tisch einer Meßeinrichtung, beispielsweise an einer Werkzeugmaschine, gebildet sein, der seinerseits einen Meßkopf trägt.

Das Schienensystem kann mit einer oder mehreren Schienen ausgeführt sein, die auf einem gemeinsamen Basisteil oder auf einem gemeinsamen Sockel befestigt sein können. Für die Form der Schiene bzw. Schienen gibt es eine weitgehende Gestaltungsfreiheit. Neben Rundschienen kommen insbesondere und vorzugsweise Profilschienen in Frage.

Wenn hier weiter von Rollkörpern die Rede ist, so kommen grundsätzlich Kugeln, zylindrische Nadeln und Rollen, aber auch bombierte Nadeln und Rollen in Frage, deren Mantelfläche eine von radial außen betrachtet konvexe oder konkave Erzeugende haben. Die Schienenlaufelemente müssen natürlich der jeweiligen Profilform der Schiene bzw. Schienen angepaßt sein. Eine besonders bevorzugte Kombination einer Schiene und eines Schienenlaufelements besteht aus einer Profilschiene mit einer Bodenfläche zur Befestigung auf einem Sockel, einer Kopffläche und zwei Seitenflächen, wobei Rollkörperrollbahnen an den Seitenflächen und an der Kopffläche angebracht sein können.

Dementsprechend sind die Schienenlaufelemente dann U-förmig ausgebildet mit einem der Schienenkopffläche benachbarten Steg und mit Schenkeln, von denen je einer einer Seitenfläche der jeweiligen Schiene gegenübersteht.

In vielen Fällen müssen zwischen dem Objekt und dem Schienensystem Querkräfte und Momente in zur Laufrichtung senkrechten Querebenen übertragen werden. Es wird dann die Anordnung der Rollbahnen an der Schiene bzw. den Schienen und die Anordnung der querkraft- bzw. momentübertragenden Rollkörperreihen der einzelnen Rollkörperschleifen so gewählt, daß diese den zu erwartenden Querkräften und Momenten präzisionserhaltend standhalten können. Häufig wird man die Rollbahnen und die Anordnung der Rollkörperschleifen in den Schienenlaufelementen so wählen, daß in einer zur Laufrichtung orthogonalen Querebene Querkräfte in beliebigen Richtungen übertragen werden können und damit auch beliebige Momente um die Laufrichtung. Wenn das Schienensystem von mehreren Schienen gebildet ist, so ist es auch denkbar, daß nur an einer Schiene Querkräfte in allen Richtungen innerhalb einer Querebene übertragen werden können, während an einer weiteren Schiene Querkräfte nur in einer Richtung übertragen werden können, so daß die Anordnung insgesamt relativ unsensibel gegen Parallelitätsabweichungen der Schienen ist.

Bei all diesen Führungssystemen besteht häufig die Forderung einer äußerst präzisen Positionierung des Objekts gegenüber dem Schienensystem im Hinblick auf die notwendige Präzision von Bearbeitungs- und/oder Meßvorgängen. Dies bedeutet, daß die Führung des Objekts gegenüber dem Schienensystem in einer zur Laufrichtung orthogonalen Ebene eindeutig und starr sein muß.

Es hat sich gezeigt, daß auch bei Erfüllung der Forderung nach eindeutiger und starrer Lagerung des Objekts auf dem Schienensystem häufig Schwingungen des Objekts gegenüber dem Schienensystem auftreten können, insbesondere dann, wenn das Schienensystem oder/und das Objekt in schwingungsübertragender Verbindung mit einer bewegte Teile enthaltenden Vorrichtung, zum Beispiel einer Werkzeugmaschine, steht. Aus dieser Erkenntnis heraus sind bereits verschiedene Lösungen entwickelt worden, um ohne Einschränkung der Eindeutigkeit und Starrheit der Führung des Objekts gegenüber dem Schienensystem etwa auftretende Schwingungen dämpfen und damit unschädlich machen können.

Aus der deutschen Gebrauchsmusterschrift 89 03 980 und einer Veröffentlichung "INA Sonderdruck aus KEM Nr. 11, November 1989, Konradin-Verlag" ist es bekannt, ein Objekt auf einer Führungsschiene mittels zwei Führungswagen zu führen, die ihrerseits auf der Führungsschiene durch Wälzkörper geführt sind und zusätzlich zu diesen Führungswagen zwischen der Führungsschiene und dem Objekt ein Dämpfungselement in Form eines die Führungsschiene umgreifenden Schlittens vorzusehen, wobei die Innenkontur des Dämpfungsschlittens zum überwiegenden Teil dem Profil der Führungsschiene derart angepaßt ist, daß zwischen dem Dämpfungsschlitten und der Führungsschiene ein Dämpfungsspalt von 0 bis 40 mµ eingegrenzt ist, und wobei dieser Dämpfungsspalt mit Öl gefüllt sein kann. Festzuhalten ist, daß hierbei zwischen dem Dämpfungsschlitten und der Führungsschiene keine Rollkörper vorgesehen sind.

Es ist ferner aus der DE-A1 41 21 559 bekannt geworden, einen durch Rollkörper auf einer Führungsschiene geführten Führungswagen an mindestens einem seiner Enden mit einem Schwingungsdämpfungsblock auszuführen, der in reibendem Kontakt mit einer an der Schiene ausgebildeten Reibungsfläche steht.

Weiterhin ist es aus der DE-A 41 04 717 bekannt, zur gedämpften Führung eines Objekts auf einer Schiene neben einer oder mehreren auf Rollkörpereingriff beruhenden Geradführungseinheiten wälzlagerlose Gleitführungselemente einzusetzen, wobei diese Gleitführungselemente als elastische Hohlkörper mit unter Druck stehender Flüssigkeitsfüllung ausgeführt sein können und wiederum an einer Reibfläche der jeweiligen Schiene anliegen. Auch hierbei ist im Bereich der Gleitlager kein rollender Eingriff zwischen dem zu führenden Objekt und der Schiene vorgesehen.

Weiterhin ist es aus der DE-A1 41 10 131 bekannt, bei einer Geradführungseinheit in Kombination Wälzlagergeradführungseinheiten und Gleitkontakteinheiten vorzusehen, wobei die Gleitführungseinheiten in gleitendem Kontakt mit Gleitflächen der Schiene stehen. Dabei kann an dem Gleitführungselement insbesondere ein elastisches, gewelltes Federmaterial, Gummimaterial oder Kunststoffmaterial angeordnet sein, das in reibendem Eingriff mit einem oder mehreren Gleitflächen der Schiene steht. Hierbei ist also wieder der rollende Eingriff auf den Bereich der Wälzlagereinheiten beschränkt, während im Bereich der Gleitführungseinheiten lediglich eine gleitende und reibende Berührung mit der Führungsschiene stattfindet.

Weiterhin ist es aus den japanischen Veröffentlichungen 58-6010 (6907-3J vom 14.01.1983) und 61-116 119 (6528-3J vom 03.06.1986) bekannt, Gleitführungselemente, die in rollendem Eingriff mit Führungsschienen geführt sind, zusätzlich mit reibenden Dämpfungselementen auszurüsten, welche an Reibungsflächen der Führungsschiene anliegen.

Aus der EP 472 167 A2 ist es weiter bekannt, an einem Schienenlaufelement die tragenden Abschnitte von Rollkörperschleifen auf Laufbahneinsätzen anzubringen, die an einem jeweiligen Grundkörper des Schienenlaufelements schaukelnd und gleitend mit Reibung anliegen, wobei der jeweilige Laufbahneinsatz elastisch verformbar sein kann. Hierbei soll insbesondere für eine Selbsteinstellung des Lagers im Sinne einer erhöhten Schmiegung und reduzierter Flächenpressungen gesorgt werden. Insoweit als Dämpfung beabsichtigt ist, sieht auch diese Veröffentlichung Schmiermittelkissen vor.

Auch die vorliegende Erfindung befaßt sich mit dem Problem der Schwingungsdämpfung. Es soll eine Schwingungsdämpfung, insbesondere quer zur Laufachse, das heißt in einer oder mehreren Richtungen innerhalb einer zur Laufachse orthogonalen Querebene erzielt werden, die nicht oder jedenfalls nicht ausschließlich auf reibendem Eingriff zwischen den Schienenlaufelementen und dem Schienensystem beruht.

Zur Lösung dieser Aufgabe wird erfindungsgemäß vorgeschlagen,
a) daß mindestens ein Dämpfungselement - im folgenden genannt dämpfendes Schienenlaufelement - ebenfalls durch an ihm gelagerte Rollkörperschleifen auf Rollbahnen des Schienensystems geführt ist, welche auch der ersten Teilgruppe von führenden Schienenlaufelementen zugeordnet sind, und
b) daß die Dämpfungseigenschaften dieses dämpfenden Schienenlaufelements durch Querkraftübertragungsmittel bestimmt sind, welche im Querkraftübertragungsweg zwischen den Rollkörpern des jeweiligen dämpfenden Schienenlaufelements und dem Objekt angeordnet sind.

Wenn hier von Teilgruppen gesprochen wird, so ist dieser Begriff dahin zu verstehen, daß eine Teilgruppe aus einem oder aus mehreren Schienenlaufelementen bestehen kann.

Bei der erfindungsgemäßen Ausführungsform sind also sowohl die primär führenden Schienenlaufelemente als auch die primär dämpfenden Schienenlaufelemente in rollendem Eingriff mit den Rollbahnen des Schienensystems. Dies bedeutet, daß an dem Schienensystem grundsätzlich dieselben Rollbahnen für die primär dämpfenden Schienenlaufelemente benutzt werden können, die auch als Rollbahnen für die primär für die Führungspräzision verantwortlichen Schienenlaufelemente herangezogen sind. Dadurch kann die Gestaltung der Führungsschiene bzw. der Führungsschienen unter Umständen vereinfacht werden.

Bei der erfindungsgemäßen Ausführungsform wird primär eine Dämpfung von Schwingungen in zur Laufrichtung orthogonalen Querebenen erzielt. Gleichwohl soll nicht ausgeschlossen sein, daß auch eine Dämpfung von Schwingungen in Laufrichtung vorgenommen wird. Eine Dämpfung von Schwingungen in Laufrichtung kann in herkömmlicher Weise durch reibenden Eingriff mit dem Schienensystem herbeigeführt werden. Häufig ist es aber nicht notwendig, Schwingungen in Laufrichtung zu dämpfen. In diesem Fall kann, ohne daß die Dämpfung von Schwingungen in zur Laufrichtung orthogonale n Querebenen beeinträchtigt wird, auf jeglichen reibenden Eingriff mit dem Schienensystem verzichtet werden. Dies kann von erheblichem Vorteil sein, weil dadurch die Präzision der Objektpositionierung in Laufrichtung verbessert werden kann.

Es ist angesichts der bisherigen Bemühungen der Fachwelt um die Lösung des Problems der Schwingungsdämpfungen, die durchwegs auf Reibungseingriff mit dem Schienensystem abgestellt waren, in hohem Maße überraschend, daß man durch den Einsatz unterschiedlicher rollender Schienenlaufelemente ebenfalls eine hochwirksame Dämpfung von Schwingungen erzielen kann, insbesondere eine Dämpfung von Schwingungen in zur Laufrichtung orthogonalen Ebenen. Durch geeignete Gestaltung der primär für die Dämpfung verantwortlichen Schienenlaufelemente ist es darüber hinaus sogar möglich, gewünschtenfalls auch Schwingungen in Laufrichtung zu dämpfen.

Bei der erfindungsgemäßen Ausgestaltung ist es von besonderer Bedeutung, daß die primär für die Führungspräzision verantwortlichen Schienenlaufelemente ohne Kompromisse im Hinblick auf die Dämpfung so gestaltet werden können, daß sie eine äußerst präzise Positionierung des Objekts in einer zur Laufrichtung orthogonalen Querebene erbringen. Andererseits können die primär zur Dämpfung bestimmten Schienenlaufelemente ohne Rücksicht auf eine präzise Führungsfunktion so gestaltet werden, daß sie optimale Dämpfung ergeben.

Ein günstiges Dämpfungsverhalten läßt sich insbesondere dadurch feststellen, daß man durch ein definiertes Anregungssignal eine Querschwingung erzeugt und daß man das Abklingen der Schwingungsamplitude insbesondere am Objekt mißt. Je rascher die Schwingungsamplitude abklingt, umso besser ist das Dämpfungsverhalten.

Die Eignung von Schienenlaufelementen zur Dämpfung in Verbindung mit anderen zur Erzeugung der Führungsgenauigkeit eingesetzten Schienenlaufelementen kann nach dieser Methode durch relativ einfache Vorversuche von Fall zu Fall festgestellt werden. Generell kann gesagt werden, daß beste Dämpfungsergebnisse dann erzielt werden, wenn querkraftübertragende Verbindungsmittel zwischen dem Objekt und dem Schienensystem in einer zur Laufrichtung orthogonalen Querebene im Bereich eines dämpfenden Schienenlaufelements betrachtet verformungsweicher sind als querkraftübertragende Verbindungsmittel zwischen dem Objekt und dem Schienensystem in einer zur Laufrichtung orthogonalen Ebene im Bereich eines führenden Schienenlaufelements
oder/und
wenn querkraftübertragende Verbindungsmittel zwischen dem Objekt und dem Schienensystem in einer zur Laufrichtung orthogonalen Querebene im Bereich eines dämpfenden Schienenlaufelements nach Querschwingungsanregung durch ein definiertes Anregungssignal einen rascheren Schwingungsamplitudenabfall zeigen als querkraftübertragende Verbindungsmittel zwischen dem Objekt und dem Schienensystem in einer zur Laufrichtung orthogonalen Querebene im Bereich eines führenden Schienenlaufelements.

Wenn hier von querkraftübertragenden Verbindungsmitteln die Rede ist, so sind hiermit alle Teile gemeint, die kraft- oder schwingungsübertragend zwischen dem Objekt und dem Schienensystem zwischengeschaltet sind, also insbesondere der Grundkörper des jeweiligen dämpfenden Schienenlaufelements, die Anordnung der führenden Rollkörper an diesem Grundkörper und die Befestigungsmittel, welche der Verbindung des Grundkörpers mit dem Objekt dienen.

Unter Umständen kann eine Dämpfungswirkung auch dadurch erzielt werden, daß querkraftübertragende Verbindungsmittel zwischen dem Objekt und dem Schienensystem in einer zur Laufrichtung orthogonalen Querebene im Bereich eines dämpfenden Schienenlaufelements eine andere Eigenfrequenz besitzen als querkraftübertragende Verbindungsmittel zwischen dem Objekt und dem Schienensystem in einer zur Laufrichtung orthogonalen Querebene im Bereich eines führenden Schienenlaufelements.

Der Erfindungsvorschlag ist insbesondere anwendbar, wenn mindestens ein führendes Schienenlaufelement und mindestens ein dämpfendes Schienenlaufelement jeweils einzeln zwischen dem Objekt und dem Schienensystem angeordnet und mit dem Objekt verbunden sind. Grundsätzlich ist es aber auch denkbar, daß mindestens ein führendes Schienenlaufelement mit dem Objekt direkt verbunden ist und mindestens ein dämpfendes Schienenlaufelement mit jeweils mindestens einem führenden Schienenlaufelement verbunden ist; in diesem letzteren Fall braucht das dämpfende Schienenlaufelement nicht direkt mit dem Objekt verbunden zu sein; es kann vielmehr ausschließlich über ein angrenzendes führendes Schienenlaufelement mit dem Grundkörper verbunden sein.

Bevorzugt ist vorgesehen, daß sämtliche Rollbahnen des Schienensystems sowohl mit Rollkörpern mindestens eines führenden Schienenlaufelements als auch mit Rollkörpern mindestens eines dämpfenden Schienenlaufelements besetzt sind.

Es ist möglich, daß die Unterschiedlichkeit zwischen einem führenden Schienenlaufelement und einem dämpfenden Schienenlaufelement wenigstens zum Teil in der Art der Verbindung zwischen dem jeweiligen Schienenlaufelement und dem Objekt begründet ist. Dabei ist insbesondere an die Möglichkeit gedacht, daß zwischen einem dämpfenden Schienenlaufelement und dem Objekt mindestens eine querschwingungsdämpfende Zwischenschicht angeordnet ist und daß in der Verbindung zwischen dem führenden Schienenlaufelement und dem Objekt eine solche Zwischenschicht entweder fehlt oder - wenn vorhanden - mit anderen Elastizitäts- oder/und Dämpfungseigenschaften ausgeführt ist.

Die geometrische Anordnung der Zwischenschicht bzw. Zwischenschichten kann entsprechend den Richtungen gewählt werden, in denen störende Schwingungen zu erwarten sind. Ist eine Universaldämpfung erwünscht, das heißt eine Dämpfung in allen Richtungen innerhalb einer zur Laufrichtung orthogonalen Querebene, so empfiehlt es sich, mindestens zwei Dämpfungsschichten vorzusehen, deren Schichtebenen zur Laufrichtung im wesentlichen parallel sind, wobei die Schichtebenen der einzelnen Dämpfungsschichten zueinander einen von 180° verschiedenen Winkel, insbesondere einen Winkel von ca. 90°, einschließen, dieser Winkel wiederum in einer zur Laufrichtung orthogonalen Ebene betrachtet.

Die Dämpfungsschichten können zwischen den angrenzenden starren Flächen frei angebracht sein. Es ist aber auch denkbar, daß die Dämpfungsschichten derart bemessen und angeordnet sind, daß bei Überschreitung bestimmter Schwingungsamplituden Abstandshaltemittel zwischen den angrenzenden steifen Flächen in Eingriff treten.

Die schwingungsdämpfende Zwischenschicht zwischen einem dämpfenden Schienenlaufelement und dem Objekt kann als eine Haftvermittlungsschicht ausgebildet sein, beispielsweise als eine Kleberschicht oder als eine Vulkanisationsschicht auf der Basis von kautschukähnlichem Werkstoff. Die Dämpfungseigenschaften können dabei auch durch die Auswahl des Schichtwerkstoffs und dessen Dimensionierung beeinflußt werden. Eine solche haftvermittelnde Dämpfungsschicht kann insbesondere auch eine Dämpfung von Längsschwingungen in Laufrichtung bewirken.

Daneben ist es weiterhin denkbar, daß die dämpfungsvermittelnde Zwischenschicht als eine kompressionskraftübertragende Zwischenschicht ausgebildet ist, welche zwischen angrenzenden steifen Flächen unter Kompression gehalten wird.

Selbst dann, wenn durch die Kompressionskraft die dämpfungsvermittelnde Zwischenschicht bis zum Wirksamwerden etwaiger steifer Anschläge zusammengepresst wird, kann durch die Dämpfungsschicht bei entsprechender Flächenausdehnung der Dämpfungsschicht durchaus eine Dämpfungswirkung erzielt werden. Als Werkstoffe für eine dämpfende Zwischenschicht können insbesondere elastomere Werkstoffe verwendet werden, zu denen die kautschuk-elastischen Werkstoffe, aber auch die üblichen Kunststoffe oder Plastikwerkstoffe zählen. Weiterhin kann die Zwischensicht aus einer Flüssigkeit, insbesondere aus einem hochviskosen Öl bestehen. In diesem letzteren Fall läßt sich eine Zwischenschicht definierter Schichtstärke insbesondere dann einstellen, wenn die aus Flüssigkeit bestehende Zwischenschicht in ihrer Flächenausdehnung durch Schichtrandbegrenzungsmittel begrenzt ist.

Dabei können die Schichtrandbegrenzungsmittel als Dichtungsmittel, insbesondere Ringdichtungsmittel, ausgeführt sein. Diese Letzteren können elastisch oder plastisch und elastisch ausgeführt sein. Ist mit sehr hohen Drücken in der flüssigen Trennschicht zu rechnen, so empfiehlt es sich, die dämpfenden Schienenlaufelemente in ihrer Dichtungsstellung zu positionieren, das heißt durch steife Abstützmittel gegen den Flüssigkeitsdruck abzustützen.

Die Dämpfung eines dämpfenden Schienenlaufelements mit einer Dämpfschicht kann besonders groß dadurch werden, daß eine Festkörperdämpfung und eine Flüssigkeitsdämpfung miteinander kombiniert werden, etwa in der Weise, daß die dämpfende Zwischenschicht Flüssigkeitskammern enthält, deren Volumina durch Schwingungen in einer zur Laufrichtung orthogonalen Ebene gegensinnig veränderbar sind und daß diese Flüssigkeitskammern durch mindestens einen Dämpfungskanal miteinander verbunden sind. Dabei ist es möglich, daß die Flüssigkeitskammern durch Ausnehmungen der Dämpfungsschicht angrenzend an Anlageflächen eines dämpfenden Schienenlaufelements und eines Objekts gebildet sind.

Die Dämpfungseigenschaften eines dämpfenden Schienenlaufelements können auch darauf beruhen, daß ein dämpfendes Schienenlaufelement mit dem Objekt durch Reibschluß in mindestens einer zur Laufrichtung orthogonalen Ebene verbunden ist. Dabei ist es möglich, daß das dämpfende Schienenlaufelement in Laufrichtung zwischen zwei Klemmkörpern eingeklemmt ist, welche ihrerseits an dem Objekt befestigt sind.

Es ist weiterhin möglich, daß die Unterschiedlichkeit zwischen dem dämpfenden Schienenlaufelement und dem führenden Schienenlaufelement wenigstens zum Teil in der Unterschiedlichkeit von Werkstoffen eines Grundkörpers des dämpfenden Schienenlaufelements und eines Grundkörpers des führenden Schienenlaufelements begründet ist. Hierbei wird insbesondere daran gedacht, daß sich der Werkstoff des Grundkörpers des dämpfenden Schienenlaufelements und der Werkstoff des Grundkörpers des führenden Schienenlaufelements durch unterschiedlichen Elastizitätsmodul voneinander unterscheiden, wobei der Elastizitätsmodul im Fall des führenden Schienenlaufelements größer ist. Beispielsweise ist es denkbar, daß der Werkstoff des Grundkörpers des führenden Schienenlaufelements Stahl ist und der Werkstoff des Grundkörpers des dämpfenden Schienenlaufelements aus der Gruppe der Leichtmetalle und der hartelastischen Kunststoffe ausgewählt ist.

Weiterhin soll die Möglichkeit erfaßt werden, daß die Unterschiedlichkeit eines führenden Schienenlaufelements und eines dämpfenden Schienenlaufelements wenigstens zum Teil in der Unterschiedlichkeit der Querschnittsform oder/und der Querschnittsdimensionierung eines Grundkörpers des führenden Schienenlaufelements und eines Grundkörpers des dämpfenden Schienenlaufelements begründet ist, die Querschnittsform jeweils in einer zur Laufrichtung orthogonalen Ebene betrachtet.

Weiterhin soll die Möglichkeit erfaßt sein, daß ein Grundkörper des dämpfenden Schienenlaufelements mit mindestens einem annähernd in Laufrichtung verlaufenden, steifigkeitsmindernden Schlitz versehen ist und daß im Grundkörper eines führenden Schienenlaufelements ein entsprechender Schlitz entweder nicht vorhanden oder - falls vorhanden - anders dimensioniert oder/und gefüllt oder/und anders gefüllt ist. Dabei kann der mindestens eine steifigkeitsmindernde Schlitz des Grundkörpers eines dämpfenden Schienenlaufelements eine die Elastizität oder/und Dämpfungseigenschaften des Grundkörpers beeinflussende Füllmasse enthalten. Optimale Dämpfung wird man durch die Schlitzung dann erreichen, wenn der mindestens eine Schlitz des Grundkörpers des dämpfenden Schienenlaufelements sich über die Gesamtlänge dieses Grundkörpers in Laufrichtung erstreckt. Die Möglichkeit eines in Laufrichtung an wenigstens einem Ende abgeschlossenen Schlitzes soll aber nicht ausgeschlossen sein, insbesondere dann nicht, wenn die Schlitzlänge in Laufrichtung sehr groß ist.

Weiterhin soll die Möglichkeit erfaßt sein, daß die Unterschiedlichkeit eines führenden Schienenlaufelements und eines dämpfenden Schienenlaufelements wenigstens zum Teil in der Unterschiedlichkeit der Abstützung einer querkraftübertragenden Rollkörperreihe an einem Grundkörper des führenden Schienenlaufelements und der Abstützung einer querkraftübertragenden Rollkörperreihe an einem Grundkörper des dämpfenden Schienenlaufelements begründet ist. Es ist denkbar, daß die Unterschiedlichkeit der Abstützung wenigstens zum Teil darauf beruht, daß im Fall eines führenden Schienenlaufelements die querkraftübertragende Rollkörperreihe auf einer unmittelbar an dem Grundkörper angeformten Laufbahn läuft, während im Fall eines dämpfenden Schienenlaufelements die querkraftübertragende Rollkörperreihe auf einem Zwischenträger läuft, der seinerseits an dem Grundkörper abgestützt ist. Es soll aber auch nicht ausgeschlossen sein, daß sowohl am führenden Schienenlaufelement als auch am dämpfenden Schienenlaufelement Zwischenträger vorhanden sind, die unterschiedlich am jeweiligen Schienenlaufelement abgestützt sind.

Eine besonders interessante Kombination ist folgende: Das führende Schienenlaufelement ist aus einem härteren Werkstoff hergestellt, an dem die Rollkörper unmittelbar geführt werden können; andererseits ist das dämpfende Schienenlaufelement aus einem Werkstoff mit höherer Verformungsweichheit hergestellt, der zur unmittelbaren Führung der Rollkörper weniger geeignet ist, zum Beispiel Leichtmetall. Hier werden nun an dem verformungsweicheren Grundkörper des dämpfenden Schienenlaufelemnets härtere Zwischenträger eingesetzt. Diese bewirken einerseits durch ihre größere Härte eine verschleißarme Führung der Rollkörper, andererseits kann durch die Anlage dieser Zwischenträger an dem Grundkörper ein zusätzlicher Dämpfungseffekt erreicht werden, so daß die Dämpfung einerseits auf der Materialstruktur des Grundkörpers und andererseits auf der Paarung zwischen dem Zwischenträger und dem Grundkörper beruhen kann.

Die Paarung eines Zwischenträgers und eines Grundkörpers ist insbesondere deshalb für die Dämpfungswirkung interessant, weil in der Anlagefläche zwischen diesen beiden eine reibende Mikrobewegung zugelassen werden kann. Diese reibende Mikrobewegung wird primär in einer zur Laufrichtung orthogonalen Querebene stattfinden. Bei entsprechender Lagerung ist aber auch eine Mikroreibung in Laufrichtung nicht ausgeschlossen, so daß auch eine gewisse Dämpfung in Laufrichtung erzielt werden kann, ohne daß es einer reibenden Berührung zwischen dem Schienenlaufelement und dem Schienensystem bedarf.

Im Fall der Verwendung eines Zwischenträgers zwischen Rollkörpern und Grundkörper des dämpfenden Laufelements ist es weiterhin möglich, daß der Zwischenträger an dem respektiven Grundkörper unter Vermittlung mindestens einer querschwingungsdämpfenden Trennschicht abgestützt ist. Auch hier kann in Parallelschaltung zur Trennschicht zwischen dem Grundkörper und dem Zwischenträger eine Distanzbegrenzung in Form von Abstandshaltemitteln vorgesehen sein, welche steifer ist als die Trennschicht, etwa in der Weise, daß die Trennschicht von einer Tasche einer Anlagefläche des Zwischenträgers oder des Grundkörpers aufgenommen ist. Die Trennschicht zwischen dem Zwischenträger und dem Grundkörper kann wiederum aus einem gummielastischen Werkstoff oder einem Plastik-Werkstoff bestehen. Sofern die Trennschicht aus einem formbeständigen oder formelastischen Werkstoff besteht, ist es möglich, daß die Tasche an ihren in Laufrichtung beabstandeten Enden offen ist. Es ist aber auch denkbar, daß die Tasche längs eines Umfangsrandes der Trennschicht geschlossen ist; in diesem Fall kann die Trennschicht auch aus einer Flüssigkeit, insbesondere einer zäh-viskosen Flüssigkeit gebildet sein. Die Trennschicht kann grundsätzlich als einziges kraftübertragendes Mittel zwischen dem Zwischenträger und dem Grundkörper vorgesehen sein. Ein Dämpfungseffekt wird aber auch dann erreicht, wenn die Trennschicht gegebenenfalls durch besondere Spannmittel unter solcher Kompressionsvorspannung steht, daß respektive Abstandshaltemittel des Zwischenträgers und des Grundkörpers in gegenseitigem Eingriff stehen.

Weiter ist es möglich, daß die Unterschiedlichkeit zwischen einem führenden Schienenlaufelement und einem dämpfenden Schienenlaufelement wenigstens zum Teil darin begründet ist, daß die Rollkörper des führenden Schienenlaufelements und die Rollkörper des dämpfenden Schienenlaufelements in einem Querschnitt orthogonal zur Laufrichtung mit zugehörigen Laufbahnen des respektiven Schienenlaufelements unterschiedliche Eingriffsgeometrien bilden. Der Begriff "Eingriffsgeometrie" ist dabei sehr allgemein zu verstehen. Die Eingriffsgeometrie ist einerseits - im laufrichtungsorthogonalen Querschnitt betrachtet - von der Profilform des Rollkörpers und andererseits von der Profilform der Laufbahn abhängig. Man kann nun die Profilform des Rollkörpers variieren, indem man Kugeln unterschiedlicher Größe oder Rollen unterschiedlicher Größe oder/und unterschiedlicher Mantellinienform einsetzt. Weiterhin kann man die Profilform der jeweils zugehörigen Laufbahn variieren. Auf diese Weise ergeben sich Möglichkeiten zur Einstellung des jeweils gewünschten Dämpfungseffekts. Man kann sich ohne weiteres vorstellen, daß das Dämpfungsverhalten in einer zur Laufrichtung orthogonalen Querebene bei Verwendung von Kugeln als Rollkörper allein schon dadurch erheblich beeinflußt werden kann, daß man die "Schmiegung" zwischen Kugeln und Laufbahnprofil verändert.

Es wird weiterhin die Möglichkeit in Betracht gezogen, daß die Unterschiedlichkeit zwischen einem führenden Schienenlaufelement und einem dämpfenden Schienenlaufelement zum Teil darin begründet ist, daß die Rollkörper des führenden Schienenlaufelements und die Rollkörper des dämpfenden Schienenlaufelements unterschiedlich sind hinsichtlich mindestens eines der Kriterien: Geometrie, Werkstoffauswahl, Härte.

Weiterhin wird auch die Möglichkeit in Betracht gezogen, daß die Unterschiedlichkeit eines führenden Schienenlaufelements und eines dämpfenden Schienenlaufelements wenigstens zum Teil darin begründet ist, daß die Rollkörper des führenden Schienenlaufelements mit größerer Vorspannung zwischen einer zugehörigen Rollbahn des Schienensystems und einer zugehörigen Laufbahn des führenden Schienenlaufelements eingespannt sind als die Rollkörper des dämpfenden Schienenlaufelements zwischen der zugehörigen Rollbahn des Schienensystems und einer zugehörigen Laufbahn des dämpfenden Schienenlaufelements.

Weiterhin wird die Möglichkeit in Betracht gezogen, daß die Unterschiedlichkeit zwischen einem führenden Schienenlaufelement und einem dämpfenden Schienenlaufelement wenigstens zum Teil darin begründet ist, daß die querkraftübertragenden Rollkörperreihen des führenden Schienenlaufelements mit einer Laufbahn des führenden Schienenlaufelements in Eingriff stehen, welche größere Oberflächenhärte besitzt als die entsprechende Laufbahn eines dämpfenden Schienenlaufelements.

Die Unterschiedlichkeit eines führenden Schienenlaufelements und eines dämpfenden Schienenlaufelements kann auch darauf beruhen, daß im Falle eines dämpfenden Schienenlaufelements ein gemeinsamer prismatischer Zwischenträger mit je einer Rollkörperlaufbahn für lastübertragende Rollkörperreihen benachbarter Rollkörperschleifen und mit prismatischen Seitenflächen zur Abstützung an entsprechenden Stützflächen eines Grundkörpers derart geformt ist, daß in einer zur Laufrichtung orthogonalen Ebene betrachtet die einer Rollkörperlaufbahn zugehörige Kraftübertragungsresultierende mit einer im Sinne der Kraftübertragung auf den Grundkörper zugehörigen Prismenseitenfläche einen stumpfen Winkel δ einschließt, welcher größer ist als 90°, insbesondere größer als 120° und vorzugsweise größer als 150°, während im Fall eines führenden Laufelements die lastübertragenden Rollkörperreihen benachbarter Rollkörperschleifen entweder an Laufbahnen anliegen, die unmittelbar an dem zugehörigen Grundkörper angeformt sind, oder aber an Laufbahnen eines gemeinsamen prismatischen Zwischenträgers, wobei an diesem prismatischen Zwischenträger die Rollkörperlaufbahnen und die Prismenseitenflächen so angeformt sind, daß in einem zur Laufrichtung orthogonalen Schnitt betrachtet die zu einer Rollkörperlaufbahn zugehörige Kraftübertragungsresultierende mit einer im Sinne der Kraftübertragung auf den Grundkörper zugehörige Prismenseitenfläche einen Winkel von annähernd 90° einschließt.

All diese vorstehend in Betracht gezogenen Möglichkeiten der Variation einer Verbindung zwischen Objekt und Schienensystem (im oben definierten allgemeinen Sinn) können miteinander kombiniert werden, um durch einfache Vorversuche unterschiedliches Dämpfungsverhalten zu gewinnen.

Ein besonderer Vorteil der Erfindung ist auch in folgendem zu sehen: Es stehen Laufelemente unterschiedlicher Verformungseigenschaften im Hinblick auf unterschiedliche Führungsaufgaben zur Verfügung, die zum Zusammenbau mit ein und derselben Führungsschiene geeignet sind. Man kann nun als führende Laufelemente solche einsetzen, die für die Führung schwerer Objekte bei höchster Führungspräzision bestimmt und geeignet sind und als dämpfende Laufelemente solche wählen, welche für die Führung leichterer Objekte bestimmt und geeignet sind. Die Auswahl dieser Letzteren kann dabei wieder durch einfachste Vorversuche getroffen werden. Auf diese Weise besteht die Möglichkeit, durch Kombination vorhandener Normelemente eine schwingungsgedämpfte Führung höchster Präzision zu erzielen.

Eine bevorzugte Gestaltung der Schienenlaufelemente - und dies gilt sowohl für die führenden als auch für die dämpfenden Schienenlaufelemente - besteht darin, daß ein Schienenlaufelement im wesentlichen einen U-förmigen Querschnitt besitzt und mit einem Steg und zwei Schenkeln je einer Profilseitenfläche einer Profilschiene des Schienensystems gegenüberliegt. Dabei ist es möglich, daß das Objekt auf einer oder auf mehreren Schienen mit jeweils einer Reihe von führenden und dämpfenden Schienenlaufelementen geführt ist.

In der Regel wird man eine Anordnung derart treffen, daß die führenden und die dämpfenden Schienenlaufelemente innerhalb der Reihe in bezug auf eine Längsmitte der Reihe annähernd symmetrisch verteilt angeordnet sind; das heißt, es ist möglich, daß die Reihe ein mittleres dämpfendes Schienenlaufelement und zwei diesem benachbarte führende Schienenlaufelemente umfaßt oder daß die Reihe ein mittleres führendes und zwei diesem benachbarte dämpfende Schienenlaufelemente umfaßt.

Bei der Führung von schweren Objekten, welche großen Querkräften und Momenten und der Schienenlaufrichtung unterworfen sind, ist es vorteilhaft, wenn das Objekt auf mehreren, vorzugsweise zueinander im wesentlichen parallelen Schienen durch führende und dämpfende Schienenlaufelemente geführt ist.

Die beiliegenden Figuren erläutern die Erfindung anhand von Ausführungsbeispielen; es stellen dar:
- Figur 1: eine Draufsicht einer Führung eines Objekts auf einem Zweischienensystem;
- Figur 2: einen Schnitt nach Linie II-II der Figur 1;
- Figur 3: einen Schnitt nach Linie III-III der Figur 1;
- Figuren 4-8: Schnitte entsprechend demjenigen der Figur 3 bei weiteren Ausführungsformen von dämpfenden Schienenlaufelementen;
- Figur 9: wiederum einen Schnitt entsprechend demjenigen gemäß Figur 3 durch ein dämpfendes Schienenlaufelement;
- Figur 10: eine Draufsicht zu Figur 9 in Pfeilrichtung X der Figur 9;
- Figur 11: einen Schnitt entsprechend demjenigen nach Figur 9 bei einer weiteren Ausführungsform eines dämpfenden Schienenlaufelements;
- Figur 12: eine Draufsicht in Pfeilrichtung XII der Figur 11;
- Figuren 13-15: wiederum Schnitte entsprechend demjenigen nach Figur 3 bei weiteren dämpfenden Schienenlaufelementen;
- Figuren 16a und 16b: Schnitte entsprechend den Figuren 2 bzw. 3 durch ein führendes und ein dämpfendes Schienenlaufelement;
- Figur 17: einen vergrößerten Teilschnitt zu Figur 16b;
- Figur 18: eine weitere Ausführungsform mit einer dämpfenden Zwischenschicht;
- Figur 19: eine weitere Ausführungsform mit klemmender Verspannung des dämpfenden Schienenlaufelements und eines Objekts;
- Figuren 20 und 21: eine weitere Paarung eines führenden Schienenlaufelements und eines dämpfenden Schienenlaufelements und
- Figur 22: ein vergrößertes Detail zu Figur 21.

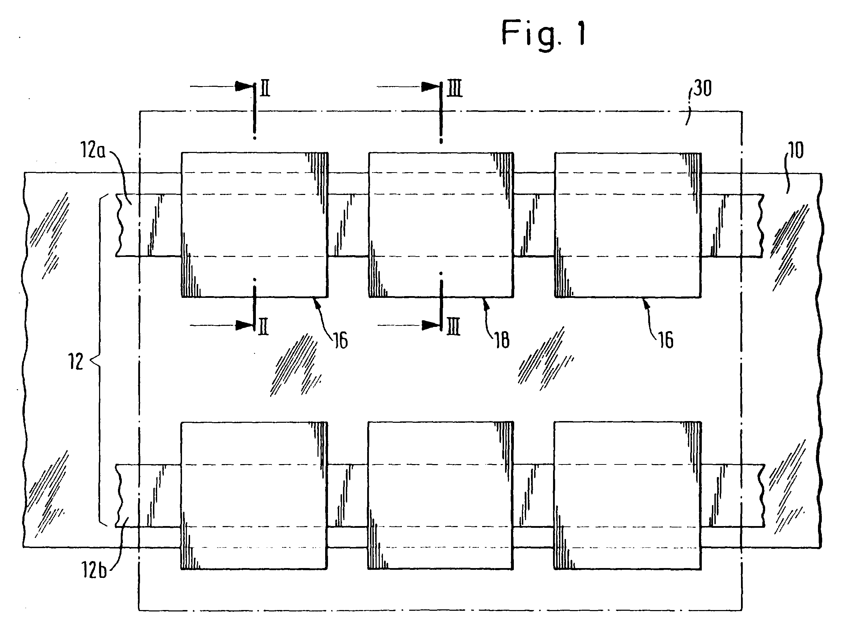

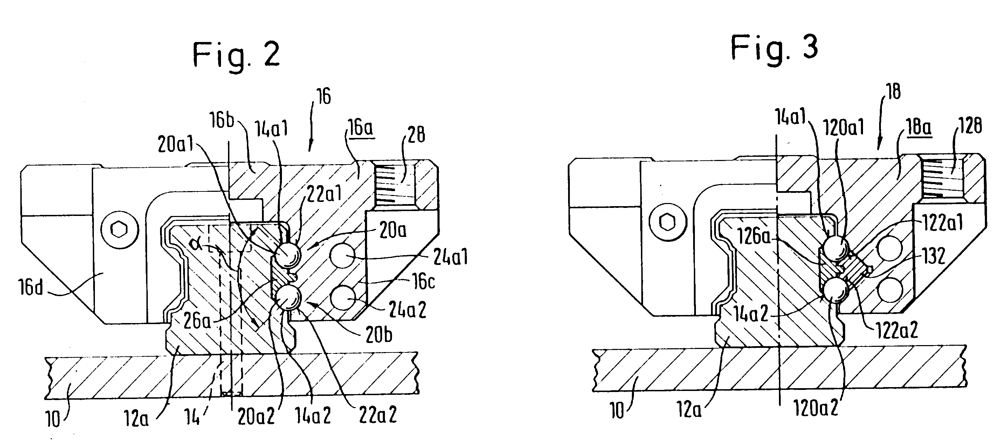

In Figuren 1 bis 3 ist ein Sockel mit 10 bezeichnet. Auf diesem Sockel sind zueinander parallel zwei Führungsschienen verlegt, die zusammen ein Schienensystem 12 bilden. Die einzelnen Schienen sind dabei mit 12a und mit 12b bezeichnet. Die Schienen 12a und 12b sind durch Befestigungsschrauben 14 auf dem Sockel befestigt. Eine von diesen Befestigungsschrauben ist in Figur 2 angedeutet.

Auf jeder der beiden Schienen 12a und 12b sind zwei führende Schienenlaufelemente 16 und dazwischen ein dämpfendes Schienenlaufelement 18 geführt. Die Anordnung kann auch so sein, daß zwei dämpfende Schienenlaufelemente 18 beidseits eines führenden Schienenelements 16 angeordnet sind.

In Figur 2 erkennt man eines der führenden Schienenlaufelemente 16. Es umfaßt einen U-förmigen Grundkörper 16a mit einem Stegteil 16b und zwei Schenkelteilen 16c und 16d. An jedem der Schenkelteile 16c und 16d sind zwei Rollkörperschleifen, nämlich Kugelschleifen 20a und 20b, angeordnet mit je einer tragenden Kugelreihe 20a1 bzw. 20a2, welche auf Rollbahnen 14a1 bzw. 14a2 der Führungsschiene 12a laufen. Andererseits sind die tragenden Kugelreihen 20a1 und 20a2 auf Laufbahnen 22a1 und 22a2 des jeweiligen Schenkels 16c bzw. 16d abgestützt. Die Kugelschleifen sind durch rücklaufende Kugelreihen geschlossen, welche durch Bohrungen 24a1 und 24a2 geführt sind. Die tragenden Kugelreihen 20a1 und 20a2 sind dabei durch Halteleisten 26a in Eingriff mit den Kugellaufbahnen 22a1 und 22a2 gehalten, so daß die Kugeln der Kugelschleifen unverlierbare Bestandteile des führenden Schienenlaufelements 16 sind, auch wenn dieses von der zugehörigen Führungsschiene 12a abgezogen wird. Die Kraftübertragungsebenen der tragenden Kugelreihen 20a1 und 20a2 schließen miteinander in der Schnittebene gemäß Figur 2 einen Winkel α von ca. 90° ein.

An dem Grundkörper 16a sind Befestigungsbohrungen 28 vorgesehen. Diese Befestigungsbohrungen 28 dienen der Verschraubung des Grundkörpers 16a mit einer Tischplatte 30, welche in Figur 1 mit strichpunktierter Linie angedeutet ist. Diese Tischplatte wird auch als "das Objekt" bezeichnet.

Das in Figur 3 dargestellte dämpfende Schienenlaufelement 18 ist im Prinzip genauso aufgebaut wie das führende Schienenlaufelement 16 gemäß Figur 2 mit dem folgenden Unterschied: während gemäß Figur 2 bei dem führenden Schienenlaufelement 16 die tragenden Kugelreihen 20a1 und 20a2 in Laufbahnen 22a1 und 22a2 laufen, die unmittelbar an dem aus gegebenenfalls gehärtetem Wälzlagerstahl bestehenden Grundkörper 16a angeformt sind, sind bei dem dämpfenden Schienenlaufelement 18 gemäß Figur 3 die tragenden Kugelreihen 120al und 120a2 im wesentlichen auf einem prismenförmigen Zwischenträger 132 geführt, der mit Kugellaufbahnen 122a1 und 122a2 ausgeführt ist. Die Halteleiste 126a ist dabei an dem Zwischenträger 132 gehalten. Die tragenden Kugelreihen 120a1 und 120a2 laufen dabei wiederum in den Kugelrollbahnen 14a1 und 14a2 der Führungsschiene 12a. Der Grundkörper 18a des dämpfenden Schienenlaufelements 18 ist aus Aluminium hergestellt. Der Zwischenträger 132 ist aus Stahl hergestellt. Damit ist der Grundkörper 18a auch bei gleichem Querschnitt verformungsweicher als der Grundkörper 16a. Dies hat zur Folge, daß das Schienenlaufelement 18 zwar keinen wesentlichen Beitrag zu einer präzisen Führung des Objekts 30 auf dem Schienensystem 12 liefert, wohl aber eine Schwingungsdämpfung bewirken kann. Diese Schwingungsdämpfung wird noch dadurch begünstigt, daß zwischen dem Zwischenträger 132 aus Stahl und dem Grundkörper 18a eine Mikroreibung stattfinden kann. Die Schwingungsdämpfungswirkung des dämpfenden Schienenlaufelements 18 wirkt sich insbesondere in der in Figur 3 dargestellten, zur Laufrichtung orthogonalen Querebene aus. Es ist aber nicht ausgeschlossen, daß eine gewisse Schwingungsdämpfungswirkung auch bezüglich Schwingungen besteht, die parallel zur Laufrichtung sind, dann nämlich, wenn eine Mikroreibung des Zwischenträgers 132 gegenüber dem Grundkörper 18a auch parallel zur Laufrichtung möglich ist.

Die Dämpfungseigenschaften des dämpfenden Schienenlaufelements 18a können noch dadurch verbessert werden, daß dieses im Querschnitt schwächer ausgeführt wird als das Schienenlaufelement 16. Weiterhin können die Dämpfungseigenschaften dadurch beeinflußt werden, daß die Schmiegung der Kugeln der tragenden Kugelreihen 120a1 und 120a2 bezüglich der Kugellaufbahnen 122a1 und 122a2 verändert wird. Weiterhin ist eine Beeinflussung der Dämpfungseigenschaften durch unterschiedliche Materialauswahl für die Zwischenträger 132 und insbesondere auch durch unterschiedliche Oberflächenhärtung der Zwischenträger im Bereich der Kugellaufbahnen 122a1 und 122a2 möglich. Weiterhin ist das Dämpfungsverhalten beeinflußbar durch unterschiedliche Werkstoffe, insbesondere Werkstoffe unterschiedlicher Härte, für die Kugeln der Kugelschleifen. Die Befestigung der Grundkörper 16a und 18a an dem Objekt 30 kann grundsätzlich gleich sein. Es ist aber auch möglich, durch unterschiedliche Befestigungsart die Dämpfungseigenschaften des dämpfenden Schienenlaufelements 18 zu beeinflussen.

Im Falle des führenden Schienenlaufelements 16 stellen der Grundkörper 16a, die mit den Gewindebohrungen 28 zusammenwirkenden, nicht dargestellten Schrauben und die tragenden Kugelreihen 20a1 und 20a2 die querkraftübertragenden Verbindungsmittel zwischen dem Objekt 30 und der Führungsschiene 12a dar.

Im Falle des dämpfenden Schienenlaufelements 18 gemäß Figur 3 stellen der Grundkörper 18a, die in die Bohrungen 128 eingreifenden Befestigungsschrauben, der Zwischenträger 132 und die tragenden Kugelreihen 120a1 und 120a2 die querkraftübertragenden Verbindungsmittel zwischen dem Objekt 30 und der Schiene 12a dar. Bei einem Vergleich dieser querkraftübertragenden Verbindungsmittel für das führende Schienenlaufelement 16 gemäß Figur 2 einerseits und das dämpfende Schienenlaufelement 18 der Figur 3 andererseits gilt grundsätzlich, daß diese querkraftübertragenden Verbindungsmittel für den Fall der dämpfenden Schienenlaufelemente 18 verformungsweicher sind und nach Querschwingungsanregung durch ein definiertes Anregungssignal einen rascheren Schwingungsamplitudenabfall zeigen als die querkraftübertragenden Verbindungsmittel für die führenden Schienenlaufelemente 16. Häufig besteht die Möglichkeit, daß die tragenden Kugelreihen zwischen den Rollbahnen der Schiene und den Laufbahnen des Schienenlaufelements unter Vorspannung stehen. Auch diese Vorspannung kann als ein Dämpfungseinstellparameter benutzt werden.

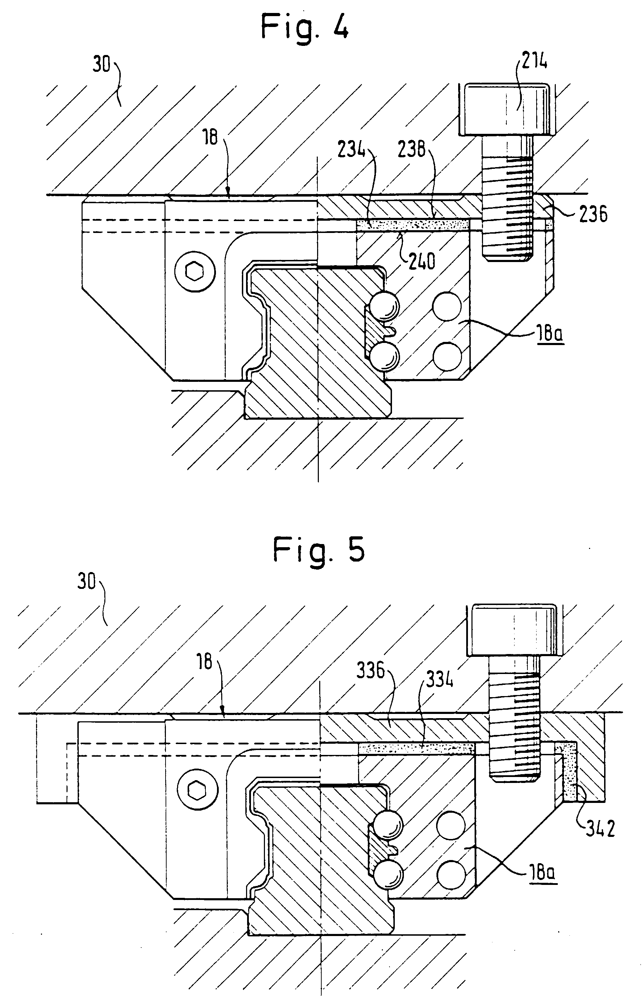

Ein weites Feld für die Beeinflussung der Dämpfungscharakteristik eröffnet sich in der Art der Verbindung des dämpfenden Schienenlaufelements 18 mit dem Objekt 30. Dies ist in den folgenden Figuren gezeigt:
Gemäß Figur 4 ist der Grundkärper 18a durch eine Dämpfungszwischenschicht 234 an einer Trägerplatte 236 befestigt, die ihrerseits durch Schrauben 214 an dem Objekt 30 befestigt ist. Diese dämpfende Zwischenschicht 234 gewährt dem Grundkörper 18a eine gedämpfte Schwingungsmöglichkeit in allen Richtungen senkrecht zur Laufrichtung, das heißt, in allen Richtungen, die innerhalb der Schnittebene der Figur 4 denkbar sind. Die Zwischenschicht 234 kann als eine haftvermittelnde Schicht, beispielsweise eine Kleberschicht oder eine vulkanisierte Gummischicht, ausgebildet sein, welche mit der angrenzenden Fläche 238 der Trägerplatte 236 und der angrenzenden Fläche 240 des Grundkörpers 18a durch Vulkanisation von gummiartigem Werkstoff verbunden sein kann.

Die Ausführungsform von Figur 5 unterscheidet sich von derjenigen gemäß Figur 4 dadurch, daß die Trägerplatte 336 als ein Profilteil ausgebildet ist. Dadurch läßt sich neben der dämpfenden Zwischenschicht 334 eine weitere dämpfende Zwischenschicht 342 zwischen dem Grundkörper 18a und dem Objekt 30 bereitstellen. Diese beiden dämpfenden Zwischenschichten 334 und 342 befinden sich beide parallel zur Laufrichtung und schließen miteinander einen annähernd rechten Winkel ein. Auf diese Weise lassen sich die Dämpfungswirkungen von, bezogen auf die Figur 5, horizontal gerichteten Schwingungen und vertikal gerichteten Schwingungen optimieren. Auch in Figur 5 sind die Zwischenschichten 334 und 342 als haftvermittelnde Schichten ausgebildet.

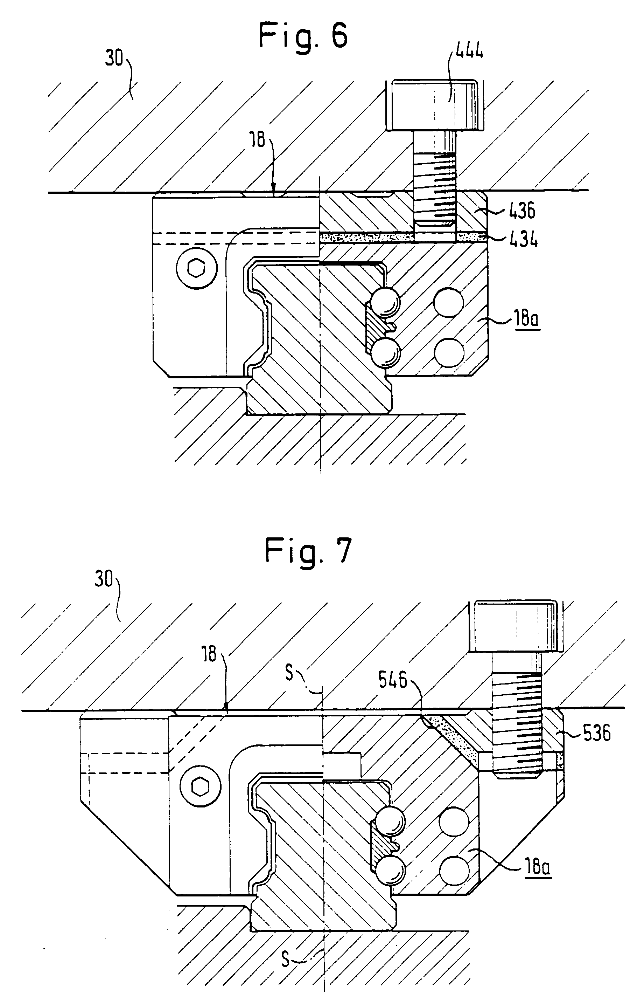

In Figur 6 ist eine dämpfende Zwischenschicht 434 zwischen dem Grundkörper 18a und der Trägerplatte 436 vorgesehen. Der Grundkörper 18a ist durch eine haftvermittelnde Zwischenschicht 434 mit der Trägerplatte 436 verbunden. Hier kann durch die Vorspannung der dämpfenden Zwischenschicht 434 das Dämpfungsverhalten beeinflußt werden.

In der Ausführungsform gemäß Figur 7 ist eine dämpfende Zwischenschicht 546 zwischen dem Grundkörper 18a und der Trägerplatte 536 vorgesehen. Die Trägerplatte 536 ist mit dem Objekt 30 verschraubt. Die dämpfende Zwischenschicht 546 nimmt zum Teil eine geneigte Stellung ein. Eine entsprechende dämpfende Zwischenschicht ist zwischen dem Grundkörper 18a und der Trägerplatte 536 auf der linken Seite der Symmetrieebene vorgesehen (nicht dargestellt). Die dämpfende Zwischenschicht ist hier wieder als haftvermittelnde Schicht ausgebildet. Durch die Neigung der dämpfenden Zwischenschichten 546 kann das Dämpfungsverhalten beeinflußt werden.

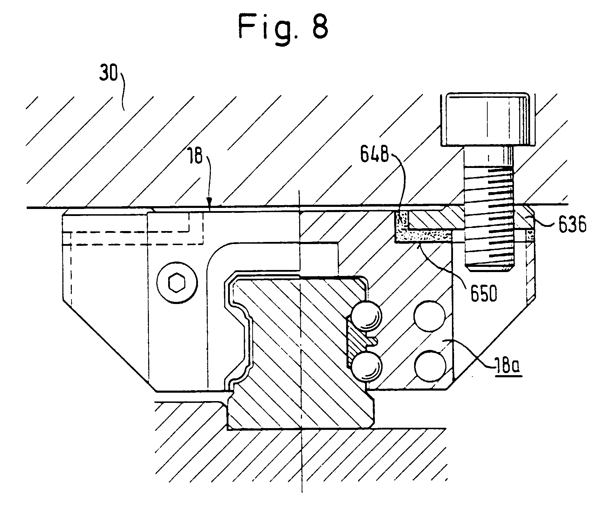

In der Ausführungsform nach Figur 8 ist das Objekt 30 mit dem Grundkörper 18a durch eine abgewinkelte dämpfende Zwischenschicht 648 haftvermittelnd verbunden, wobei diese profilierte Zwischenschicht 648 zwischen einer Profilausnehmung 650 und einem komplementären Profil einer Trägerplatte 636 haftvermittelnd angeordnet ist. Die Zwischenschicht 648 ist ebenso auf der linken Seite der Symmetrielinie vorgesehen (nicht dargestellt).

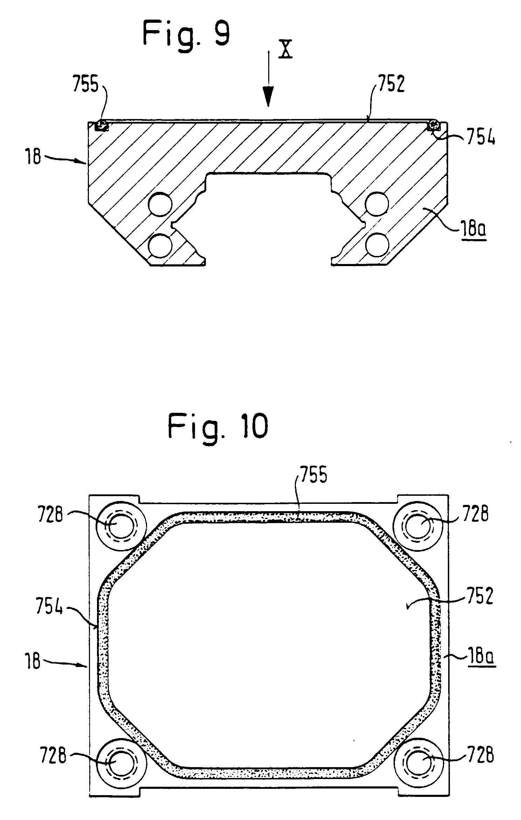

In der Ausführungsform nach den Figuren 9 und 10 ist an dem Grundkörper 18a eines dämpfenden Schienenlaufelements 18 eine Anlagefläche 752 zur Anlage an dem Objekt 30 ausgebildet. Die Anlagefläche 752 ist plan, weist aber eine Ringnut 754 auf, welche einen Dichtring 755 aus elastomerem Material aufnimmt. Der Laufkörper 18a wird mit dem Objekt 30 durch Schrauben verschraubt, welche in Bohrungen 728 eingreifen. Innerhalb der Dichtung 755, das heißt innerhalb der Ringnut 754, wird eine Schicht aus zähflüssigem Dämpfungsmittel aufgenommen.

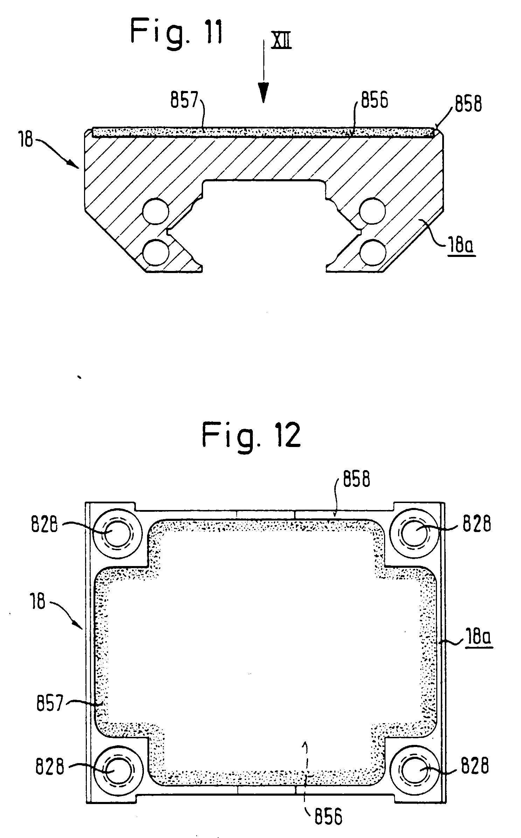

In der Ausführungsform nach den Figuren 11 und 12 ist an der Oberseite des Grundkörpers 18a ist eine flache Wanne 856 ausgebildet. Diese nimmt eine dämpfende Zwischenschicht 857, beispielsweise aus elastomerem Kunststoff, auf. Diese elastomere Zwischenschicht ragt im unbelasteten Zustand geringfügig über die Randfläche 858 nach oben vor und wird beim Verspannen des Grundkörpers 18a mit dem Objekt durch in die Bohrungen 828 eingreifende Schrauben komprimiert, gegebenenfalls soweit komprimiert, daß die Randfläche 858 an der planen Unterseite des Objekts anliegt.

Bei den Ausführungsformen nach den Figuren 9 bis 12 kann man die in die Bohrungen 728,828 eingreifenden Schrauben weglassen, um die Mitnahme von Grundkörper 18a und Objekt über die Adhäsionskraft zu erreichen.

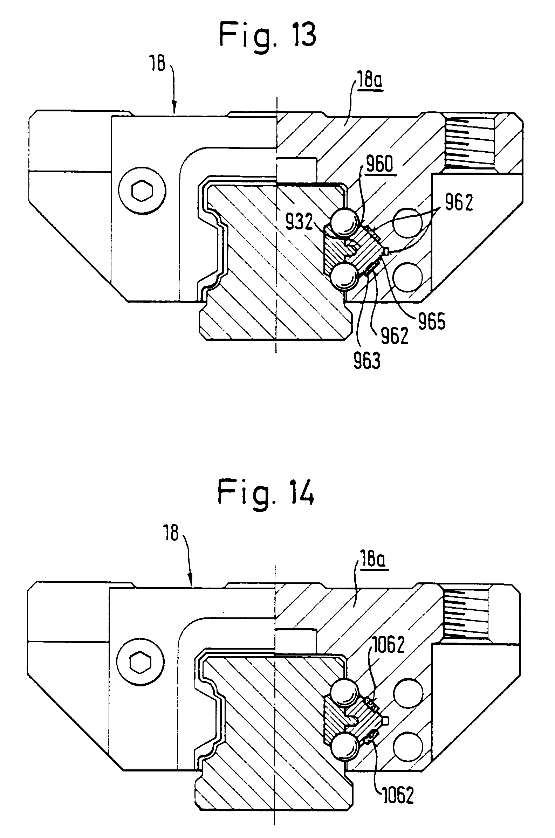

Figur 13 zeigt einen Schnitt entsprechend demjenigen der Figur 3. In Abwandlung der dortigen Ausführungsform sind die Zwischenträger 932 in komplementären Profilrinnen 960 aufgenommen, in deren Anlageflächen Taschen 962 für die Aufnahme einer dämpfenden Zwischenschicht 963 ausgebildet sind. Die Taschen 962 können an ihren Enden geschlossen sein. In diesem Fall können die entsprechenden Dämpfungsschichten aus flüssigem oder elastomerem Werkstoff bestehen. Die Füllung der Taschen kann im Falle von elastomerem Füllmittel so bemessen sein, daß das Füllmittel in unmontiertem Zustand geringfügig über die Anlageflächen 965 vorsteht und dann beim Einbau, das heißt beim Zusammenbau des Schienenlaufelements mit der Schiene, komprimiert wird. Es ist aber auch denkbar, daß - wie in Figur 14 dargestellt - die Taschen 1062 an beiden Enden oder an einem Ende offen sind.

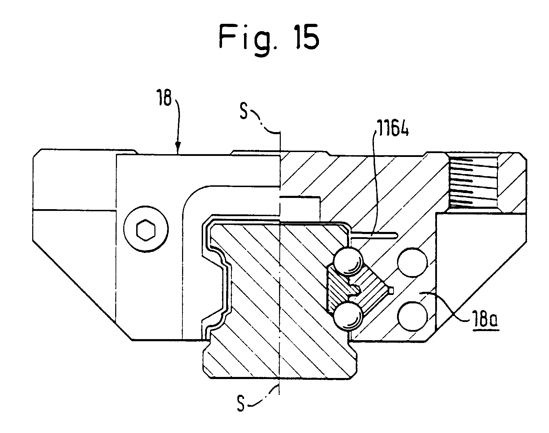

Die Figur 15 zeigt eine Abwandlung gegenüber der Ausführungsform nach Figur 3, bei welcher in den Grundkörper 18a ein Schlitz 1164 eingeschnitten ist. Durch einen solchen Schlitz kann die Verformungsweichheit des Grundkörpers 18a beeinflußt werden im Sinne einer erhöhten Dämpfung. Statt des einen Schlitzes können mehrere Schlitze in verschiedenen Richtungen mit unterschiedlichen Schlitztiefen und unterschiedlichen Schlitzbreiten vorgesehen sein. Die Schlitzanordnung ist bevorzugt beidseitig der Symmetrielinie S-S symmetrisch. Die Schlitze können mit Dämpfungsschichten gefüllt sein. Es ist denkbar, die gleiche Ausführungsform wie in Figur 15 dargestellt für die führenden Schienenlaufelemente zu verwenden und die unterschiedlichen Führungs- bzw. Dämpfungseigenschaften durch unterschiedliche Füllung der Schlitze zu gewinnen.

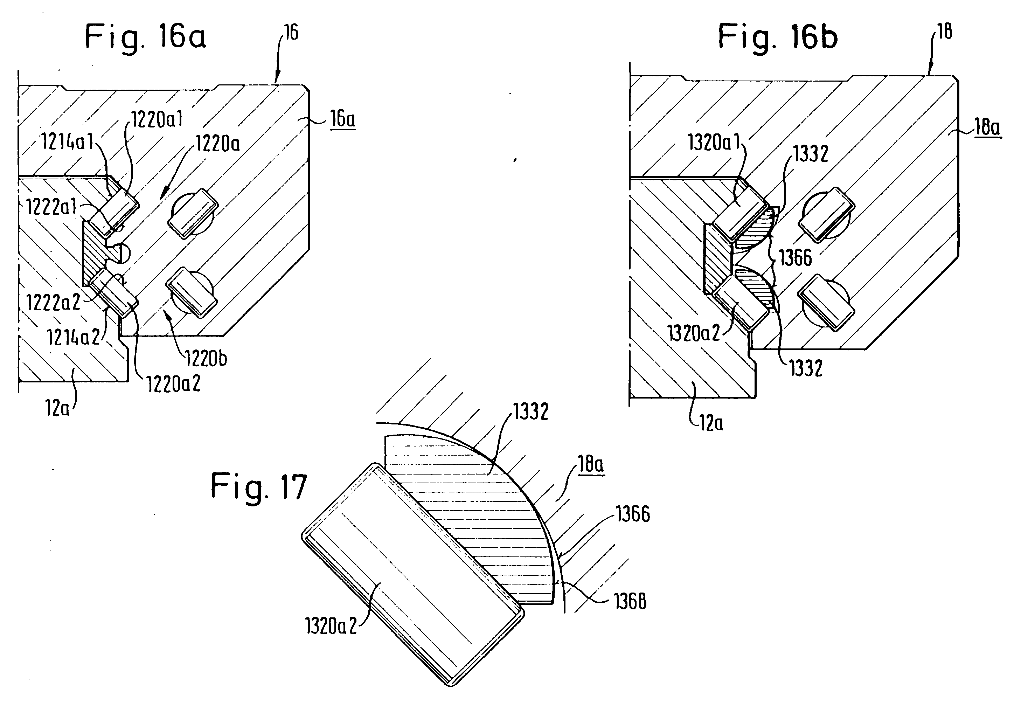

In den Figuren 16a und 16b sind Halbschnitte dargestellt. Der Halbschnitt gemäß Figur 16a zeigt ein führendes Schienenlaufelement 16, das mittels zweier Rollenschleifen 1220a und 1220b an einer Führungsschiene 12 geführt ist. Dabei liegen die tragenden Rollenreihen 1220a1 und 1220a2 einerseits an den Rollbahnen 1214a1 und 1214a2 der Führungsschiene 12a an.

Andererseits liegen die Rollen an Laufbahnen 1222a1 und 1222a2 des Grundkörpers 16a unmittelbar an. Der Grundkörper ist hier wieder bevorzugt aus Wälzlagerstahl hergestellt. Demgegenüber sind bei einem entsprechenden dämpfenden Schienenlaufelement 18 gemäß Figur 16b die Rollen der tragenden Rollenreihen 1320a1 und 1320a2 auf Laufbahnen von Zwischenträgern 1332 geführt, welche ihrerseits in Stützflächen 1366 des Grundkörpers 18a abgestützt sind. Die Stützflächen 1366 sind in Figur 17 in vergrößertem Maßstab dargestellt. Es handelt sich um konkave Rinnen, welche zylindrisch oder auch zweidimensional konkav gekrümmt sein können. Die Zwischenträger 1332 weisen demgegenüber konvexe Stützflächen 1368 auf, welche wiederum zylindrisch konvex oder ballig ausgebildet sein können, je nachdem, wie die Rinnen 1366 ausgebildet sind. Die Krümmungsverhältnisse der konvexen und konkaven Stützflächen 1368 und 1366 beeinflussen die Mikroreibung der Zwischenträger 1332 gegenüber dem Grundkörper 18a. Es kann also durch die Abstimmung der Eingriffsgeometrie der Stützflächen 1366 und 1368 wiederum eine Einwirkung auf die Dämpfungsverhältnisse herbeigeführt werden. Auch die Mantellinienform und die Härte der Rollen kann zur Beeinflussung der Dämpfungseigenschaften herangezogen werden.

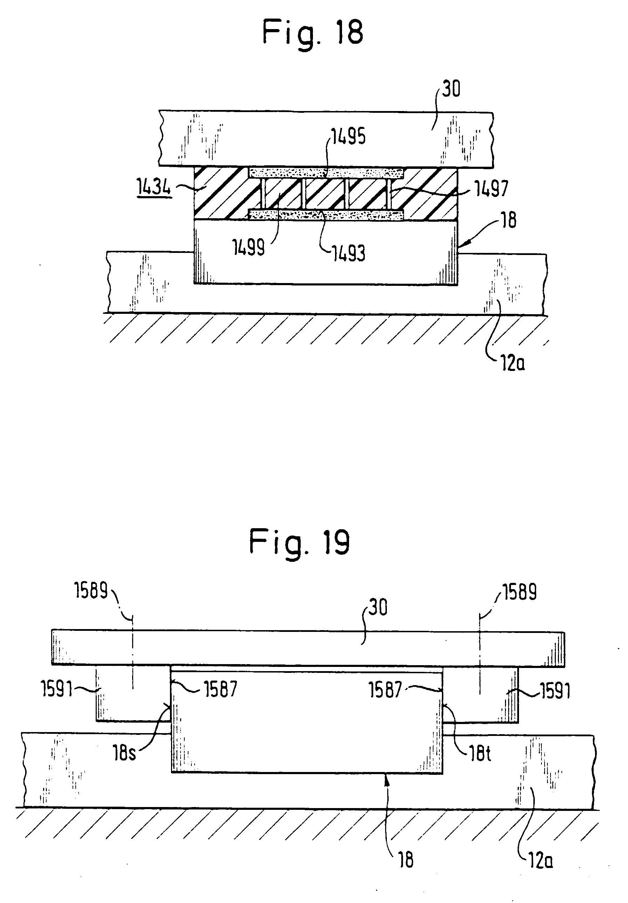

In Figur 18 ist zwischen einem auf einer Schiene 12a laufenden dämpfenden Schienenlaufelement 18 und der Tischplatte oder dem Objekt 30 eine Dämpfungsschicht 1434 ausgebildet. Diese Dämpfungsschicht 1434 ist in ihrem mittleren Bereich 1499 als eine flüssigkeitsdurchlässige "Membran" ausgebildet. Die Kammern 1495 und 1493 oberhalb bzw. unterhalb der Membran 1499 sind durch Dämpfungsbohrungen 1497 miteinander verbunden und mit Flüssigkeit, z.B. einem hydraulischen Öl, gefüllt. Die Dämpfungsschicht 1434 kann aus Kunststoff oder gummielastischem Werkstoff ggf. aber auch aus einem Metall hergestellt sein, wobei im Fall einer metallischen Ausbildung durch entsprechend geringe Querschnitte eine Elastizität gewährleistet sein kann. Schwingungen in einer zur Schienenlängsrichtung orthogonalen Ebene führen zu Deformationen des Membranbereichs 1499 und damit zu gegenläufigen Volumensveränderungen der Kammern 1495 und 1493. Der Volumenausgleich erfolgt dabei durch die Dämpfungsbohrungen 1497 hindurch. Der Füllgrad der Kammern 1495 und 1493 kann durch Versuche ermittelt werden und ist, ebenso wie das elastische Verhalten der Zwischenschicht 1434 für die Dämpfungswirkung verantwortlich. Das Schienenlaufelement 18 kann beliebig ausgeführt sein, beispielsweise so, wie in Figur 2 oder in Figur 3 oder in Figur 13 oder in Figur 15 oder in Figuren 16a und 16b dargestellt.

Die Ausführungsform nach Figur 19 zeigt wiederum eine Laufschiene 12a mit einem dämpfenden Laufelement 18. Das dämpfende Schienenlaufelement 18 ist mit einem Objekt oder eine Tischplatte 30 verbunden, wobei die Dämpfungseigenschaften durch die Art der Verbindung zwischen dem dämpfenden Schienenlaufelement 18 und dem Objekt 30 bestimmt sind. Das dämpfende Schienenlaufelement 18 kann in seiner Grundform wieder ausgebildet sein wie in Figuren 2,3,13,14,15,16a,16b und 17 dargestellt. Die Verbindung zwischen dem Schienenlaufelement 18 und dem Objekt 30 ist durch Klemmkörper 1591 hergestellt, welche mit dem Objekt 30 beispielsweise durch Verschraubungen 1589 verbunden sind und mit ihren zur Laufrichtung orthogonalen Seitenflächen 1587 an Endflächen 18s,18t des Schienenlaufelements 18 klemmend anliegen. Der Grad der Klemmung ist dabei für die Dämpfung verantwortlich. Die Klemmung kann auch durch eine nicht dargestellte Spannvorrichtung, beispielsweise durch Schrauben, erfolgen. Die Dämpfwirkung kann bei dieser Ausführungsform auch durch die Oberflächenbearbeitung der Flächen 1587, 18s, 18t oder beliebige Zwischenschichten zwischen diesen Flächen beeinflußt werden. Es ist auch denkbar, die Klemmkörper 1591 zwei- oder mehrteilig auszuführen und zwischen deren einzelnen Teilen Spannvorrichtungen, etwa Schraubspindeln, vorzusehen, um die gewünschte Klemmung ohne Ansetzen äußerer Werkzeuge vornehmen zu können. Zwischen den Flächen 1587 einerseits und 18s, 18t andererseits kann im Betrieb eine Mikroreibung stattfinden, das heißt, eine Reibung mit Amplituden im Mikrometerbereich.

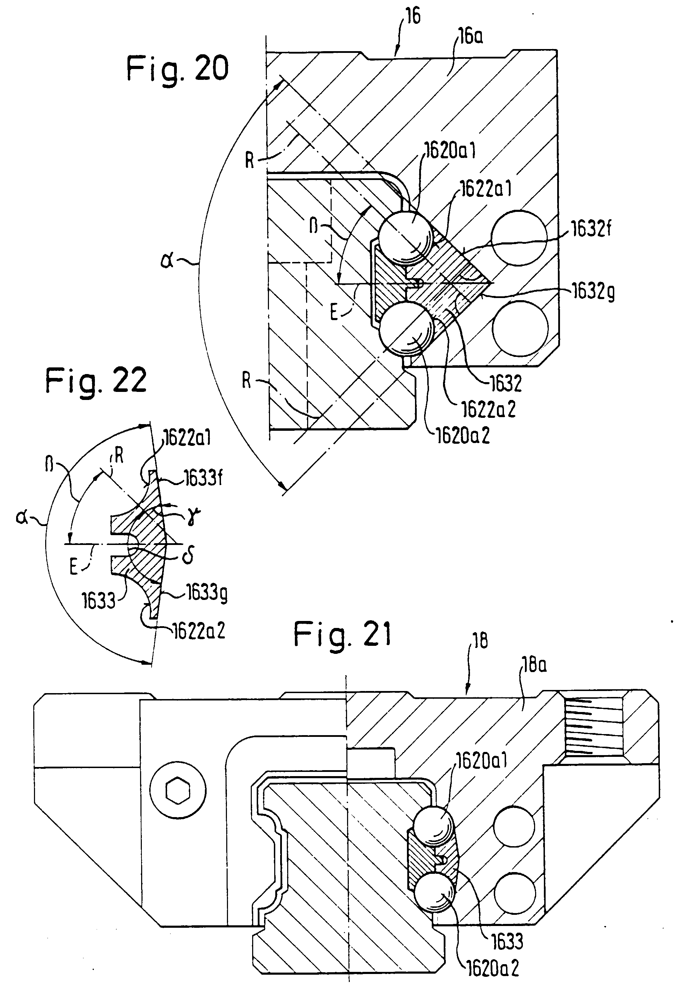

In den Figuren 20 bis 22 ist eine weitere Kombination eines führenden Schienenlaufelements 16 (Figur 2 oder 20) und eines dämpfenden Schienenlaufelements 18 (Figuren 21 und 22) dargestellt. Figur 20 zeigt eine Ausführungsform entsprechend der Figur 3. Dabei ist in dem U-förmigen Grundkörper 16a als gemeinsamer Zwischenträger 1632 für die beiden belasteten Laufkugelreihen 1620a1, 1620a2 ein Prisma vorgesehen, an welchem Laufflächen 1622a1, 1622a2 für die Laufkugelreihen 1620a1, 1620a2 ausgebildet sind. Die Seitenflächen 1632f, 1632g des Prisma bilden miteinander einen Winkel α, der etwas kleiner ist oder annähernd 90° ist. Mit diesen Seitenflächen liegt das Prisma an entsprechenden Anlageflächen des Grundkörpers 16a an.

Die Kraftübertragungsresultierenden R, welche durch die mittleren Bereiche der Kugellaufbahnen 1622a1, 1622a2 und die gegenüberliegenden Kugellaufbahnen der Schiene gehen, stehen auf den Prismenseitenflächen 1632g und 1632f annähernd senkrecht und bilden mit der horizontalen Mittelebene E einen Winkel β von ca. 45°. Man kann sich ohne weiteres vorstellen, daß bei einer solchen Anordnung nur eine geringe Mikroreibung zwischen dem prismatischen Zwischenträger 1632 und dem Grundkörper 16a stattfinden kann, da ein formschlüssiger Eingriff vorliegt, der durch die Vorspannung auf die Laufkugeln gesichert ist.

Ganz anders liegen die Verhältnisse bei der Ausführungsform des zugehörigen dämpfenden Schienenlaufelements 18. Hier erkennt man einen prismatischen Zwischenträger 1633, der in einer komplementären prismatischen Ausnehmung des Grundkörpers 18a aufgenommen ist. Die Prismenseitenflächen 1633f und 1633g schließen hierbei miteinander einen Winkel α ein, der wesentlich größer ist als der Winkel α im Falle der Figur 20 und wenig von 180° verschieden ist. Der Winkel β einer Kraftübertragungsresultierenden R gegen die horizontale Mittelebene E ist auch hier ca. 45°. Man erkennt aber nun, daß die Kraftübertragungsresultierende R mit der benachbarten Prismenseitenfläche 1633f einen spitzen Winkel γ einschließt und mit der im Sinn der Kraftübertragung zugehörigen Prismenseitenfläche 1633g einen großen stumpfen Winkel δ. Man kann sich ohne weiteres vorstellen, daß bei dieser Ausführungsform zwischen dem prismatischen Zwischenkörper 1633 und den zugehörigen Seitenflächen des Grundkörpers 18a in einer zur Laufrichtung senkrechten Ebene eine Mikroreibung möglich ist. Der Winkel α sollte zwischen 120° und 180°, vorzugsweise zwischen 150° und 175°, liegen. Wenn sich der Winkel α an 180° annähert und ggf. gleich 180° wird, so erfolgt die Festlegung des prismatischen Zwischenkörpers 1633 nur noch durch Reibungskräfte, was bei entsprechender Vorspannung zwischen dem Grundkörper 18a und der Schiene ebenfalls denkbar ist. Der Wert des Winkels δ soll jedenfalls größer sein als 90°, bevorzugt ist er größer als 120°, ggf. sogar größer als 150°.

## Patentansprüche

1. Linearführungseinrichtung für die Führung eines Objekts (30) umfassend ein Schienensystem (12) und eine - mindestens ein Gruppenmitglied umfassende - erste Teilgruppe von objektführenden, für die Führungspräzision des Objekts primär verantwortlichen, Schienenlaufelementen (16) - im folgenden genannt führende Schienenlaufelemente (16) - , welche in einer Laufrichtung auf ihnen zugeordneten Rollbahnen (14a1,14a2) des Schienensystems (12) durch an den führenden Schienenlaufelementen (16) gelagerte Rollkörperschleifen (20a,20b) geführt sind,
wobei zwischen dem Objekt (30) und dem Schienensystem (12) weiterhin eine - mindestens ein Gruppenmitglied umfassende - zweite Teilgruppe von an dem Schienensystem (12) geführten und mit dem Objekt (30) verbundenen primär für die Dämpfung von quer zur Laufrichtung gerichteten Schwingungen bestimmten Dämpfungselementen (18) vorgesehen ist, welche von den führenden Schienenlaufelementen hinsichtlich des inneren Aufbaus und/oder der Einbauverhältnisse zwischen dem Objekt (30) und dem Schienensystem (12) verschieden sind,
**dadurch gekennzeichnet,**
a) daß mindestens ein Dämpfungselement (18) - im folgenden genannt dämpfendes Schienenlaufelement (18) - ebenfalls durch an ihm gelagerte Rollkörperschleifen (120a,120b) auf Rollbahnen (14a1,14a2) des Schienensystems (12) geführt ist, welche auch der ersten Teilgruppe von führenden Schienenlaufelementen (16) zugeordnet sind, und
b) daß die Dämpfungseigenschaften dieses dämpfenden Schienenlaufelements (18) durch Querkraftübertragungsmittel bestimmt sind, welche im Querkraftübertragungsweg zwischen den Rollkörpern (120a1,120a2) des jeweiligen dämpfenden Schienenlaufelements (18) und dem Objekt (30) angeordnet sind.

2. Linearführungseinrichtung nach Anspruch 1,
**dadurch gekennzeichnet,**
daß querkraftübertragende Verbindungsmittel (Schraubbolzen zu 128,18a,132, 120a1,120a2) zwischen dem Objekt (30) und dem Schienensystem (12) in einer zur Laufrichtung orthogonalen Querebene im Bereich eines dämpfenden Schienenlaufelements (18) betrachtet verformungsweicher sind als querkraftübertragende Verbindungsmittel (Schraubbolzen zu 28,16a,20a1,20a2) zwischen dem Objekt (30) und dem Schienensystem (12) in einer zur Laufrichtung orthogonalen Ebene im Bereich eines führenden Schienenlaufelements (16).

3. Linearführungseinrichtung nach Anspruch 1 oder 2,
**dadurch gekennzeichnet,**
daß querkraftübertragende Verbindungsmittel (128,18a,132,120a1,120a2) zwischen dem Objekt (30) und dem Schienensystem (12) in einer zur Laufrichtung orthogonalen Querebene im Bereich eines dämpfenden Schienenlaufelements (18) nach Querschwingungsanregung durch ein definiertes Anregungssignal einen rascheren Schwingungsamplitudenabfall zeigen als querkraftübertragende Verbindungsmittel (28, 16a,20a1,20a2) zwischen dem Objekt (30) und dem Schienensystem (12) in einer zur Laufrichtung orthogonalen Querebene im Bereich eines führenden Schienenlaufelements (16).

4. Linearführungseinrichtung nach einem der Ansprüche 1 bis 3,
**dadurch gekennzeichnet,**
daß querkraftübertragende Verbindungsmittel (128,18a,132, 120a1,120a2) zwischen dem Objekt (30) und dem Schienensystem (12) in einer zur Laufrichtung orthogonalen Querebene im Bereich eines dämpfenden Schienenlaufelements (18) eine andere Eigenfrequenz besitzen als querkraftübertragende Verbindungsmittel (28,16a,20a1,20a2) zwischen dem Objekt (30) und dem Schienensystem (12) in einer zur Laufrichtung orthogonalen Querebene im Bereich eines führenden Schienenlaufelements (16).

5. Linearführungseinrichtung nach einem der Ansprüche 1 bis 4,
**dadurch gekennzeichnet,**
daß mindestens ein führendes Schienenlaufelement (16) und mindestens ein dämpfendes Schienenlaufelement (18) jeweils einzeln zwischen dem Objekt (30) und dem Schienensystem (12) angeordnet und mit dem Objekt (30) verbunden sind.

6. Linearführungseinrichtung nach einem der Ansprüche 1 bis 4,
**dadurch gekennzeichnet,**
daß mindestens ein führendes Schienenlaufelement (16) mit dem Objekt (30) direkt verbunden ist und mindestens ein dämpfendes Schienenlaufelement (18) mit jeweils mindestens einem führenden Schienenlaufelement (16) verbunden ist.

7. Linearführungseinrichtung nach einem der Ansprüche 1 bis 6,
**dadurch gekennzeichnet,**
daß sämtliche Rollbahnen (14a1,14a2) des Schienensystems (12) sowohl mit Rollkörpern (20a1,20a2) mindestens eines führenden Schienenlaufelements (16) als auch mit Rollkörpern (120a1,120a2) mindestens eines dämpfenden Schienenlaufelements (18) besetzt sind.

8. Linearführungseinrichtung nach einem der Ansprüche 1 bis 5 und 7,
**dadurch gekennzeichnet,**
daß die Unterschiedlichkeit zwischen einem führenden Schienenlaufelement (16) und einem dämpfenden Schienenlaufelement (18) wenigstens zum Teil in der Art der Verbindung zwischen dem jeweiligen Schienenlaufelement (16,18) und dem Objekt (30) begründet ist.

9. Linearführungseinrichtung nach Anspruch 8,
**dadurch gekennzeichnet,**
daß zwischen einem dämpfenden Schienenlaufelement (18) und dem Objekt (30) mindestens eine querschwingungsdämpfende Zwischenschicht (234) angeordnet ist und daß in der Verbindung zwischen dem führenden Schienenlaufelement (16) und dem Objekt (30) eine solche Zwischenschicht entweder fehlt oder - wenn vorhanden - mit anderen Elastizitäts- oder/und Dämpfungseigenschaften ausgeführt ist.

10. Linearführungseinrichtung nach Anspruch 9,
**dadurch gekennzeichnet,**
daß zusätzlich zu der querschwingungsdämpfenden Zwischenschicht (857) zwischen dem dämpfenden Schienenlaufelement (18) und dem Objekt (30) Abstandshaltemittel (858) vorgesehen sind, welche steifer sind als die querschwingungsdämpfende Zwischenschicht (857).

11. Linearführungseinrichtung nach Anspruch 9 oder 10,
**dadurch gekennzeichnet,**
daß eine querschwingungsdämpfende Zwischenschicht (234) zwischen einem dämpfenden Schienenlaufelement (18) und dem Objekt (30) als eine Haftvermittlungsschicht ausgebildet ist.

12. Linearführungseinrichtung nach Anspruch 11,
**dadurch gekennzeichnet,**
daß die Haftvermittlungsschicht (234) als eine Kleberschicht ausgebildet ist.

13. Linearführungseinrichtung nach einem der Ansprüche 8 bis 12,
**dadurch gekennzeichnet,**
daß die querschwingungsdämpfende Zwischenschicht (434) als eine kompressionskraftübertragende Zwischenschicht ausgebildet ist, welche an je einer Anlagefläche (238,240) des dämpfenden Schienenlaufelements (18) und des Objekts (30) anliegt.

14. Linearführungseinrichtung nach Anspruch 13,
**dadurch gekennzeichnet,**
daß die kompressionskraftübertragende Zwischenschicht (434) zwischen den Anlageflächen des Objekts (30) und des dämpfenden Schienenlaufelements (18) unter Kompressionsvorspannung gehalten ist.

15. Linearführungseinrichtung nach Anspruch 14,
**dadurch gekennzeichnet,**
daß die Anlageflächen des Objekts (30) und des dämpfenden Schienenlaufelements (18) bis zum Anschlag von respektiven Abstandshaltemitteln (858) zwischen dem Objekt (30) und dem dämpfenden Schienenlaufelement (18) miteinander verspannt sind.

16. Linearführungseinrichtung nach einem der Ansprüche 9 bis 15,
**dadurch gekennzeichnet,**
daß die Zwischenschicht (234) aus einem elastomeren Werkstoff, insbesondere einem kautschuk-elastischen Werkstoff oder einem Plastikmaterial, besteht.

17. Linearführungseinrichtung nach einem der Ansprüche 9 bis 15,
**dadurch gekennzeichnet,**
daß die Zwischenschicht (innerhalb 754) aus einer Flüssigkeit, insbesondere aus einem hochviskosen Öl, besteht.

18. Linearführungseinrichtung nach Anspruch 17,
**dadurch gekennzeichnet,**
daß die aus Flüssigkeit bestehende Zwischenschicht (innerhalb 754) in ihrer Flächenausdehnung durch Schichtrandbegrenzungsmittel (755) begrenzt ist.

19. Linearführungseinrichtung nach Anspruch 18,
**dadurch gekennzeichnet,**
daß die Schichtrandbegrenzungsmittel Dichtungsmittel (755), insbesondere Ringdichtungsmittel, umfassen.

20. Linearführungseinrichtung nach Anspruch 19,
**dadurch gekennzeichnet,**
daß die Dichtungsmittel (755) elastisch oder plastisch und elastisch sind und durch Positionierungsmittel (754) des Objekts oder/und des dämpfenden Schienenlaufelements (18) in einer Dichtungsstellung positioniert sind.

21. Linearführungseinrichtung nach einem der Ansprüche 9 bis 16,
**dadurch gekennzeichnet,**
daß die dämpfende Zwischenschicht (1434) Flüssigkeitskammern (1493,1495) enthält, deren Volumina durch Schwingungen in einer zur Laufrichtung orthogonalen Ebene gegensinnig veränderbar sind und daß diese Flüssigkeitskammern (1493,1495) durch mindestens einen Dämpfungskanal (1497) miteinander verbunden sind.

22. Linearführungseinrichtung nach Anspruch 21,
**dadurch gekennzeichnet,**
daß die Flüssigkeitskammern (1493,1495) durch Ausnehmungen der Dämpfungsschicht (1434) angrenzend an Anlageflächen eines dämpfenden Schienenlaufelements (18) und eines Objekts (30) gebildet sind.

23. Linearführungseinrichtung nach Anspruch 8,
**dadurch gekennzeichnet,**
daß ein dämpfendes Schienenlaufelement (18) mit dem Objekt (30) durch Reibschluß in mindestens einer zur Laufrichtung orthogonalen Ebene (1587;18s) verbunden ist.

24. Linearführungseinrichtung nach Anspruch 23,
**dadurch gekennzeichnet,**
daß das dämpfende Schienenlaufelement (18) in Laufrichtung zwischen zwei Klemmkörpern (1591) eingeklemmt ist, welche ihrerseits an dem Objekt (30) befestigt sind.

25. Linearführungseinrichtung nach einem der Ansprüche 1 bis 24,
**dadurch gekennzeichnet,**
daß die Unterschiedlichkeit zwischen dem dämpfenden Schienenlaufelement (18) und dem führenden Schienenlaufelement (16) wenigstens zum Teil in der Unterschiedlichkeit von Werkstoffen eines Grundkörpers (18a) des dämpfenden Schienenlaufelements (18) und eines Grundkörpers (16a) eines führenden Schienenlaufelements (16) begründet ist.

26. Linearführungseinrichtung nach Anspruch 25,
**dadurch gekennzeichnet,**
daß sich der Werkstoff des Grundkörpers (18a) des dämpfenden Schienenlaufelements (18) und der Werkstoff des Grundkörpers (16a) des führenden Schienenlaufelements (16) durch unterschiedlichen Elastizitätsmodul voneinander unterscheiden, wobei der Elastizitätsmodul im Fall des führenden Schienenlaufelements (16) größer ist.

27. Linearführungseinrichtung nach Anspruch 26,
**dadurch gekennzeichnet,**
daß der Werkstoff des Grundkörpers (16a) des führenden Schienenlaufelements (16) Stahl ist und der Werkstoff des Grundkörpers (18a) des dämpfenden Schienenlaufelements (18) aus der Gruppe der Leichtmetalle und der harteleastischen Xunststoffe ausgewählt ist.

28. Linearführungseinrichtung nach einem der Ansprüche 1 bis 27,
**dadurch gekennzeichnet,**
daß die Unterschiedlichkeit eines führenden Schienenlaufelements (16) und eines dämpfenden Schienenlaufelements (18) wenigstens zum Teil in der Unterschiedlichkeit der Querschnittsform oder/und der Querschnittsdimensionierung eines Grundkörpers (16a) des führenden Schienenlaufelements (16) und eines Grundkörpers (18a) des dämpfenden Schienenlaufelements (18) begründet ist, die Querschnittsform jeweils in einer zur Laufrichtung orthogonalen Ebene betrachtet.

29. Linearführungseinrichtung nach einem der Ansprüche 1 bis 28,
**dadurch gekennzeichnet,**
daß ein Grundkörper (18a) des dämpfenden Schienenlaufelements (18) mit mindestens einem annähernd in Laufrichtung verlaufenden, steifigkeitsmidernden Schlitz (1164) versehen ist und daß im Grundkörper (16a) eines führenden Schienenlaufelements (16) ein entsprechender Schlitz entweder nicht vorhanden oder - falls vorhanden - anders dimensioniert oder/und gefüllt oder/und anders gefüllt ist.

30. Linearführungseinrichtung nach Anspruch 29,
**dadurch gekennzeichnet,**
daß der mindestens eine steifigkeitsmindernde Schlitz (1164) des Grundkörpers (18a) eines dämpfenden Schienenlaufelements (18) eine die Elastizität oder/und Dämpfungseigenschaften des Grundkörpers (18a) beeinflussende Füllmasse enthält.

31. Linearführungseinrichtung nach einem der Ansprüche 29 und 30,
**dadurch gekennzeichnet,**
daß der mindestens eine Schlitz (1164) des Grundkörpers (18a) des dämpfenden Schienenlaufelements (18) sich über die Gesamtlänge dieses Grundkörpers (18a) in Laufrichtung erstreckt.

32. Linearführungseinrichtung nach einem der Ansprüche 1 bis 31,
**dadurch gekennzeichnet,**
daß die Unterschiedlichkeit eines führenden Schienenlaufelements (16) und eines dämpfenden Schienenlaufelements (18) wenigstens zum Teil in der Unterschiedlichkeit der Abstützung einer querkraftübertragenden Rollkörperreihe (20a1,20a2) an einem Grundkörper (16a) des führenden Schienenlaufelements (16) und der Abstützung einer querkraftübertragenden Rollkörperreihe (120a1,120a2) an einem Grundkörper (18a) des dämpfenden Schienenlaufelements (18) begründet ist.

33. Linearführungseinrichtung nach Anspruch 32,
**dadurch gekennzeichnet,**
daß die Unterschiedlichkeit der Abstützung wenigstens zum Teil darauf beruht, daß im Fall eines führenden Schienenlaufelements (16) die querkraftübertragende Rollkörperreihe (20a1,20a2) auf einer unmittelbar an dem Grundkörper (16a) angeformten Laufbahn (22a1,22a2) läuft, während im Fall eines dämpfenden Schienenlaufelements (18) die querkraftübertragende Rollkörperreihe (120a1,120a2) auf einem Zwischenträger (132) läuft, der seinerseits an dem Grundkörper (18a) abgestützt ist.

34. Linearführungseinrichtung nach Anspruch 33,
**dadurch gekennzeichnet,**
daß der Grundkörper (16a) des führenden Schienenlaufelements (16) einen Werkstoff mit geringerer Verformungsweichheit oder/und längerer Schwingungsamplituden-Abklingzeit aufweist als der Grundkörper (18a) des dämpfenden Schienenlaufelements (18).

35. Linearführungseinrichtung nach einem der Ansprüche 33 und 34,
**dadurch gekennzeichnet,**
daß der Zwischenträger (132) unter dem Einfluß von Schwingungen einer reibenden Mikrobewegung relativ zu dem respektiven Grundkörper (18a) fähig ist.

36. Linearführungseinrichtung nach einem der Ansprüche 34 bis 35,
**dadurch gekennzeichnet,**
daß der Zwischenträger (932) an dem respektiven Grundkörper (18a) unter Vermittlung mindestens einer querschwingungsdämpfenden Trennschicht (963) abgestützt ist.

37. Linearführungseinrichtung nach Anspruch 36,
**dadurch gekennzeichnet,**
daß zwischen dem Grundkörper (18a) und dem Zwischenträger (932) zusätzlich zu der querschwingungsdämpfenden Trennschicht (963) Abstandshaltemittel (965) vorgesehen sind, welche steifer sind als die Trennschicht (963).

38. Linearführungseinrichtung nach einem der Ansprüche 36 und 37,
**dadurch gekennzeichnet,**
daß die Trennschicht (963) von einer Tasche (962) einer Anlagefläche des Zwischenträgers (932) oder des Grundkörpers (18a) aufgenommen ist.

39. Linearführungseinrichtung nach einem der Ansprüche 36 bis 38,
**dadurch gekennzeichnet,**
daß die Trennschicht (963) aus einem gummielastischen Werkstoff oder einem Plastik-Werkstoff besteht.

40. Linearführungseinrichtung nach einem der Ansprüche 36 bis 39,
**dadurch gekennzeichnet,**
daß die Tasche (962) an ihren in Laufrichtung beabstandeten Enden offen ist.

41. Linearführungseinrichtung nach einem der Ansprüche 36 bis 39,
**dadurch gekennzeichnet,**
daß die Tasche (962) längs eines Umfangsrands der Trennschicht (963) geschlossen ist.

42. Linearführungseinrichtung nach einem der Ansprüche 36 bis 41,
**dadurch gekennzeichnet,**
daß die Trennschicht (963) unter KompressionsvorSpannung steht.

43. Linearführungseinrichtung nach einem der Ansprüche 37 bis 42,
**dadurch gekennzeichnet,**
daß die Trennschicht (963) unter solcher Kompressionsvorspannung steht, daß respektive Abstandshaltemittel (965) des Zwischenträgers (932) und des Grundkörpers (18a) in gegenseitigem Eingriff stehen.

44. Linearführungseinrichtung nach Anspruch 32,
**dadurch gekennzeichnet,**
daß die Unterschiedlichkeit eines führenden Schienenlaufelements (16) und eines dämpfenden Schienenlaufelements (18) wenigstens zum Teil darauf beruht, daß im Falle eines dämpfenden Schienenlaufelements (18) ein gemeinsamer prismatischer Zwischenträger (1633) mit je einer Rollkörperlaufbahn (1620a1,1620a2) für lastübertragende Rollkörperreihen (1620a1,1620a2) benachbarter Rollkörperschleifen und mit prismatischen Seitenflächen (1633f,1633g) zur Abstützung an entsprechenden Stützflächen eines Grundkörpers (18a) derart geformt ist, daß in einer zur Laufrichtung orthogonalen Ebene betrachtet die einer Rollkörperlaufbahn (1622a1) zugehörige Kraftübertragungsresultierende (R) mit einer im Sinne der Kraftübertragung auf den Grundkörper (18a) zugehörigen Prismenseitenfläche (1633g) einen stumpfen Winkel δ einschließt, welcher größer ist als 90°, insbesondere größer als 120° und vorzugsweise größer als 150°, während im Fall eines führenden Laufelements (16) die lastübertragenden Rollkörperreihen (1620a1,1620a2) benachbarter Rollkörperschleifen entweder an Laufbahnen anliegen, die unmittelbar an dem zugehörigen Grundkörper (16a) angeformt sind, oder aber an Laufbahnen (1622a1,1622a2) eines gemeinsamen prismatischen Zwischenträgers (1632), wobei an diesem prismatischen zwischenträger (1632) die Rollkörperlaufbahnen (1622a1, 1622a2) und die Prismenseitenflächen (1632f,1632g) so angeformt sind, daß in einem zur Laufrichtung orthogonalen Schnitt betrachtet die zu einer Rollkörperlaufbahn (1622a1) zugehörige Kraftübertragungsresultierende (R) mit einer im Sinne der Kraftübertragung auf den Grundkörper (16a) zugehörigen Prismenseitenfläche (1632g) einen Winkel von annähernd 90° einschließt.

45. Linearführungseinrichtung nach einem der Ansprüche 1 bis 44,
**dadurch gekennzeichnet,**
daß die Unterschiedlichkeit zwischen einem führenden Schienenlaufelement (16) und einem dämpfenden Schienenlaufelement (18) zum Teil darin begründet ist, daß die Rollkörper (20a1,20a2) des führenden Schienenlaufelements (16) und die Rollkörper (120a1,120a2) des dämpfenden Schienenlaufelements (18) in einem Querschnitt orthogonal zur Laufrichtung mit zugehörigen Laufbahnen (22a1,22a2 bzw, 122a1,122a2) des respektiven Schienenlaufelemnts (16 bzw.18) unterschiedliche Eingriffsgeometrien bilden.

46. Linearführungseinrichtung nach Anspruch 45,
**dadurch gekennzeichnet,**
daß die Rollkörper (120a1,120a2) eines dämpfenden Schienenlaufelements (18) in einem zur Laufrichtung orthogonalen Querschnitt längs einer Berührungslinie mit einem Profil einer zugehörigen Laufbahn (122a1,122a2) reibender oder/und rollender Bewegung in einem größeren Ausmaß fähig sind als die Rollkörper (20a1,20a2) eines führenden Schienenlaufelements (16).

47. Linearführungseinrichtung nach Anspruch 46,
**dadurch gekennzeichnet,**
daß die Rollkörper (20a1,20a2 bzw. 120a1,120a2) von Kugeln gebildet sind und die querkraftübertragenden Kugelreihen an den zugehörigen Schienenlaufelementen (16 bzw. 18) in einer Laufbahn (22a1,22a2 bzw. 122a1,122a2) geführt sind, welche in einem zur Laufrichtung orthogonalen Querschnitt annähernd kreisbogenförmiges Profil besitzt, und daß das kreisbogenförmige Profil der Laufbahn (22a1,22a2) an einem führenden Schienenlaufelement (16) einen kleineren Radius besitzt als das kreisbogenförmige Profil der Laufbahn (122a1,122a2) an einem dämpfenden Schienenlaufelement (18).

48. Linearführungseinrichtung nach einem der Ansprüche 1 bis 47,
**dadurch gekennzeichnet,**
daß die Unterschiedlichkeit zwischen einem führenden Schienenlaufelement (16) und einem dämpfenden Schienenlaufelement (18) wenigstens zum Teil darin begründet ist, daß die Rollkörper (20a1,20a2) des führenden Schienenlaufelements (16) und die Rollkörper (120a1,120a2) des dämpfenden Schienenlaufelements (18) unterschiedlich sind hinsichtlich mindestens eines der Kriterien: Geometrie, Werkstoffauswahl, Härte.

49. Linearführungseinrichtung nach einem der Ansprüche 1 bis 48,
**dadurch gekennzeichnet,**
daß die Unterschiedlichkeit eines führenden Schienenlaufelements (16) und eines dämpfenden Schienenlaufelements (18) wenigstens zum Teil darin begründet ist, daß die Rollkörper (20a1,20a2) des führenden Schienenlaufelements (16) mit größerer Vorspannung zwischen einer zugehörigen Rollbahn (14a1,14a2) des Schienensystems (12) und einer zugehörigen Laufbahn (22a1,22a2) des führenden Schienenlaufelements (16) eingespannt sind als die Rollkörper (120a1,120a2) des dämpfenden Schienenlaufelements (18) zwischen der zugehörigen Rollbahn (14a1,14a2) des Schienensystems (12) und einer zugehörigen Laufbahn (122a1, 122a2) des dämpfenden Schienenlaufelemts (18).

50. Linearführungseinrichtung nach einem der Ansprüche 1 bis 49,
**dadurch gekennzeichnet,**
daß die Unterschiedlichkeit zwischen einem führenden Schienenlaufelement (16) und einem dämpfenden Schienenlaufelement (18) wenigstens zum Teil darin begründet ist, daß die querkraftübertragenden Rollkörperreihen (20a1, 20a2) des führenden Schienenlaufelements (16) mit einer Laufbahn (22a1,22a2) des führenden Schienenlaufelements (16) in Eingriff stehen, welche größere Oberflächenhärte besitzt als die entsprechende Laufbahn (122a1,122a2) eines dämpfenden Schienenlaufelements (18).

51. Linearführungseinrichtung nach einem der Ansprüche 1 bis 50,
**dadurch gekennzeichnet,**
daß ein Schienenlaufelement (16,18) im wesentlichen einen U-förmigen Querschnitt besitzt und mit einem Steg (16b) und zwei Schenkeln (16c,16d) je einer Profilseitenfläche einer Profilschiene (12a) des Schienensystems (12) gegenüberliegt.

52. Linearführungseinrichtung nach einem der Ansprüche 1 bis 51,
**dadurch gekennzeichnet,**
daß das Objekt (30) auf mindestens einer Schiene (12a,12b) des Schienensystems (12) mit in einer Reihe angeordneten, führenden und dämpfenden Schienenlaufelementen (16,18) geführt ist.

53. Linearführungseinrichtung nach Anspruch 52,
**dadurch gekennzeichnet,**
daß die führenden und die dämpfenden Schienenlaufelemente (16,18) innerhalb der Reihe in bezug auf eine Längsmitte der Reihe annähernd symmetrisch verteilt angeordnet sind.

54. Linearführungseinrichtung nach Anspruch 53,
**dadurch gekennzeichnet,**
daß die Reihe (16,18,16) ein mittleres dämpfendes Schienenlaufelement (18) und zwei diesem benachbarte führende Schienenlaufelemente (16,16) umfaßt.

55. Linearführungseinrichtung nach Anspruch 53,
**dadurch gekennzeichnet,**
daß die Reihe ein mittleres führendes und zwei diesem benachbarte dämpfende Schienenlaufelemente umfaßt.

56. Linearführungseinrichtung nach einem der Ansprüche 52 bis 55,
**dadurch gekennzeichnet,**
daß das Objekt auf mehreren, vorzugsweise zueinander im wesentlichen parallelen Schienen (12a,12b) durch führende und dämpfende Schienenlaufelemente (16,18) geführt ist.

57. Linearführungseinrichtung nach einem der Ansprüche 1 bis 56,
**dadurch gekennzeichnet,**
daß die Schienenlaufelemente (16,18), und zwar sowohl die führenden Schienenlaufelemente (16) als auch die dämpfenden Schienenlaufelemente (18) wenigstens zum Teil frei sind von reibender Berührung mit dem Schienensystem (12).

## Claims

1. A linear guiding apparatus for guiding an object (30), comprising a rail system (12) and a first partial group of object-guiding rail runner elements (16) - hereinafter referred to as guiding rail runner elements (16) - primarily responsible for the guiding precision of the object, which first partial group comprises at least one group member, said guiding rail runner elements (16) being guided in a moving direction along associated roller paths (14a1, 14a2) of said rail system (12) by rolling member loops (20a, 20b) mounted on said guiding rail runner elements (16),
a second partial group of damping elements (18) guided along said rail system (12), connected with said object (30) and being primarily responsible for the damping of vibrations directed transversely to the moving direction being additionally provided between said object (30) and said rail system (12), which second partial group comprises at least one group member, said damping elements differing from said guiding rail runner elements with respect to the internal structure and/or with respect to the mounting relationship between said object (30) and said rail system (12),
**characterized in**
a) that at least one damping element (18) - hereinafter referred to as damping rail runner element (18) - is also guided on roller paths (14a1, 14a2) of said rail (12) by rolling member loops (120a, 120b) mounted on said rail runner element (18), which roller paths are also associated with said first partial group of guiding rail runner elements (16), and
b) that the damping characteristics of said damping rail runner element (18) are determined by transverse load transmitting means provided in the transverse load transmission path between said rolling members (120a1, 120a2) of the respective damping rail runner element (18) and said object (30).

2. The linear guiding apparatus of claim 1, characterized that transverse load transmitting connection means (screw bolts for 128, 18a, 132, 120a1, 120a2) between said object (30) and said rail system (12), when seen in a transverse plane orthogonal with respect to said moving direction in a range of a damping rail runner element (18), are more easily deformable than transverse load transmitting connection means (screw bolts for 28, 16a, 20a1, 20a2) between said object (30) and said rail system (12) in a plane orthogonal with respect to said moving direction in a range of a guiding rail runner element (16).

3. The linear guiding apparatus of claim 1 or 2, characterized in that transverse load transmitting connection means (128, 18a, 132, 120a1, 120a2) between said object (30) and said rail system (12), when seen in a transverse plane orthogonal with respect to said moving direction in the range of a damping rail runner element (18), exhibit after transverse vibration excitation by a defined exciting signal a faster vibrational amplitude attenuation than transverse load transmitting connection means (28, 16a, 20a1, 20a2) between said object (30) and said rail system (12) in a transverse plane orthogonal with respect to said moving direction in the range of a guiding runner rail element (16).

4. The linear guiding apparatus of anyone of claims 1 to 3, characterized in that transverse load transmitting connection means (128, 18a, 132, 120a1, 120a2) between said object (30) and said rail system (12), when seen in a transverse plane orthogonal with respect to said moving direction in the range of a damping rail runner element (18), have another characteristic frequency than transverse load transmitting connection means (28, 16a, 20a1, 20a2) between said object 30) and said rail system (12) in a transverse plane orthogonal with respect to said moving direction in the range of a guiding rail runner element (16).

5. The linear guiding apparatus of anyone of claims 1 to 4, characterized in that at least one guiding rail runner element (16) and at least one damping rail runner element (18) each are separately located between said object (30) and said rail system (12) and are connected with said object (30).

6. The linear guiding apparatus of anyone of claims 1 to 4, characterized in that at least one guiding rail runner element (16) is directly connected with said object (30) and that at least one damping rail runner element (18) is connected with at least one guiding rail runner element (16) each.

7. The linear guiding apparatus of anyone of claims 1 to 6, characterized in that all roller paths (14a1, 14a2) of said rail system (12) are set with rolling members (20a1, 20a2) of at least one guiding rail element (16) as well as with rolling members (120a1, 120a2) of at least one damping rail element (18).

8. The linear guiding apparatus of anyone of claims 1 to 5 and 7, characterized in that the difference between a guiding rail runner element (16) and a damping rail runner element (18) is at least partly owing to the connection between the respective rail runner element (16, 18) and the object (30).

9. The linear guiding apparatus of claim 8, characterized in that at least one transverse vibration damping intermediate layer (234) is provided between a damping rail runner element (18) and said object (30) and that in the connection between said guiding rail runner element (16) and said object (30) such an intermediate layer is either missing or - if present - exhibits different elasticity or/and damping characteristics.

10. The linear guiding apparatus of claim 9, characterized in that in addition to the transverse vibration damping intermediate layer (857) spacer means (858) are provided between said damping rail runner element (18) and said object (30), which spacer means are stiffer than said transverse vibration damping intermediate layer (857).

11. The linear guiding apparatus of claim 9 or 10, characterized in that a transverse vibration damping intermediate layer (234) between a damping rail runner element (18) and said object (30) is a coherence-promoting layer.

12. The linear guiding apparatus of claim 11, characterized in that said coherence-promoting layer (234) is an adhesive layer.

13. The linear guiding apparatus of anyone of claims 8 to 12, characterized in that said transverse vibration damping intermediate layer (434) is a compression force transmitting intermediate layer (434) resting against a contact face (238, 240) of each said damping rail runner element (18) and said object (30).

14. The linear guiding apparatus of claim 13, characterized in that said compression force transmitting intermediate layer (434) is compressionally biased between said contact faces of said object (30) and of said damping rail runner element (18).

15. The linear guiding apparatus of claim 14, characterized in that said contact faces of said object (30) and of said damping rail runner element (18) are biased towards each other until mutual abutment of respective spacer means (858) provided between said object (30) and said damping rail runner element (18).

16. The linear guiding apparatus of anyone of claims 9 to 15, characterized in that said intermediate layer (234) consists of an elastomeric material, particularly of caoutchouc-elastic or plastic material.

17. The linear guiding apparatus of anyone of claims 9 to 15, characterized in that said intermediate layer (within 754) is a liquid, particularly a high-viscosity oil.

18. The linear guiding apparatus of claim 17, characterized in that the liquid intermediate layer (within 754) is limited in its area by layer edge limiting means (755).

19. The linear guiding apparatus of claim 18, characterized in that said layer edge limiting means are sealing means (755), particularly annular sealing means.

20. The linear guiding apparatus of claim 19, characterizing in that said sealing means (755) are elastic or plastic and elastic sealing means and are positioned in a sealing position by positioning means (754) of said object or/and of said damping rail runner element (18).

21. The linear guiding apparatus of anyone of claims 9 to 16, characterized in that the damping intermediate layer (1434) comprises liquid chambers (1493, 1495), the volumes of said liquid chambers being variable in opposite sense by vibrations in a plane orthogonal with respect to the moving direction, and that these liquid chambers (1493, 1495) are connected with each other by at least one damping channel (1497).

22. The linear guiding apparatus of claim 21, characterized in that said liquid chambers (1493, 1495) are formed by recesses of said damping layer (1434) adjacent a respective contact face of a damping rail runner element (18) and of an object (30).

23. The linear guiding apparatus of claim 8, characterized in that a damping rail runner element (18) is frictionally connected with said object (30) in at least one plane (1587; 18s) orthogonal with respect to the moving direction.

24. The linear guiding apparatus of claim 23, characterized in that said damping rail runner element (18) is clamped in moving direction between two clamping elements (1591) which are attached to the object (30).

25. The linear guiding apparatus of anyone of claims 1 to 24, characterized in that the difference between said damping rail runner element (18) and said guiding rail runner element (16) is at least partly owing to the different materials of a main body (18a) of said damping rail runner element (18) and a main body (16a) of a guiding rail runner element (16).

26. The linear guiding apparatus of claim 25, characterized in that the material of said main body (18a) of said damping rail runner element (18) and the material of said main body (16a) of said guiding rail runner element (16) differ from each other by their moduli of elasticity, the modulus of elasticity of said guiding rail runner element (16) being bigger.

27. The linear guiding apparatus of claim 26, characterized in that the material of said main body (16a) of said guiding rail runner element (16) is steel and the material of said main body (18a) of said damping rail runner element (18) is selected from the groups of light metals and hard-elastic plastics.

28. The linear guiding apparatus of anyone of claims 1 to 27, characterized in that the difference between a guiding rail runner element (16) and a damping rail runner element (18) is at least partly owing to the difference between the cross-sectional shape or/and the cross-sectional dimension of a main body (16a) of said guiding rail runner element (16) and a main body (18a) of said damping rail runner element (18), said cross-sectional shape being viewed in a plane orthogonal with respect to the moving direction.

29. The linear guiding apparatus of anyone of claims 1 to 28, characterized in that a main body (18a) of said damping rail runner element (18) is provided with at least one rigidity-reducing slit (1164) extending approximately along the moving direction and that in the main body (16a) of a guiding rail runner element (16) a corresponding slit is either not provided or - if provided - is dimensioned differently or/and filled or/and filled differently.

30. The linear guiding apparatus of claim 29, characterized in that said at least one rigidity-reducing slit (1164) of s-aid main body (18a) of a damping rail runner element (18) contains a filler which takes an influence on the elasticity or/and the damping characteristics of said main body (18a).

31. The linear guiding apparatus of anyone of claims 29 and 30, characterized in that said at least one slit (1164) of said main body (18a) of said damping rail runner element (18) extends along the entire length of said main body (18a) in moving direction.

32. The linear guiding apparatus of anyone of claims 1 to 31, characterized in that the difference between a guiding rail runner element (16) and a damping rail runner element (18) is at least partly owing to a difference in supporting qualities of a main body (16a) of a guiding rail runner element (16) on the one hand and of a main body (18a) of the damping rail runner element (18) on the other hand for respective rows (20a1, 20a2; 120a1, 120a2) of transverse load transmitting rolling members.

33. The linear guiding apparatus of claim 32, characterized in that the difference in supporting qualities is at least partly owing to the fact that in case of a guiding rail runner element (16) the row of transverse load transmitting rolling members (20a1, 20a2) travels on a track (22a1, 22a2) directly formed to the main body (16a), while-in case of a damping rail runner element (18) the row of transverse load transmitting rolling members (120a1, 120a2) travels on a subcarrier (132) which is supported on the main body (18a).

34. The linear guiding apparatus of claim 33, characterized in that the material of the main body (16a) of a guiding rail runner element (16) is more easily deformable or/and exhibits a longer vibrational amplitude attentuation time than the material of the main body (18a) of said damping rail runner element (18).

35. The linear guiding apparatus of anyone of claims 33 and 34, characterized in that under the influence of vibrations said subcarrier (132) is able to make a frictional micro movement relative to the respective main body (18a).

36. The linear guiding apparatus of anyone of claims 34 to 35, characterized in that the subcarrier (932) is supported on the respective main body (18a) through at least one transverse vibration damping separating layer (963).

37. The linear guiding apparatus of claim 36, characterized in that in addition to said transverse vibration damping separating layer (963) spacer means (965) stiffer than said separating layer (963) are provided between said main body (18a) and said subcarrier (932).

38. The linear guiding apparatus of anyone of claims 36 and 37, characterized in that said separating layer (963) is received by a pocket (962) of a contact face of said subcarrier (932) or of said main body (18a).

39. The linear guiding apparatus of anyone of claims 36 to 38, characterized in that said separating layer (963) is made from rubber-elastic or plastic material.

40. The linear guiding apparatus of anyone of claims 36 to 39, characterized in that said pocket (962) is open at its end portions spaced from one another in moving direction.

41. The linear guiding apparatus of anyone of claims 36 to 39, characterized in that said pocket (962) is closed along a peripheral edge of said separating layer (963).

42. The linear guiding apparatus of anyone of claims 36 to 41, characterized in that said separating layer (963) is compressionally prestressed.

43. The linear guiding apparatus of anyone of claims 37 to 42, characterized in that said separating layer (963) is compressionally prestressed such that respective spacer means (965) of said subcarrier (932) and of said main body (18a) are in mutual engagement.

44. The linear guiding apparatus of claim 32, characterized in that the difference between a guiding rail runner element (16) and a damping rail runner element (18) is at least partly owing to the fact that in case of a damping rail runner element (18) a common prismatic subcarrier (1633) is provided, said subcarrier (1633) having respective rolling member tracks (1620a1, 1620a2) for load transmitting rolling member rows (1620a1, 1620a2) of mutually adjacent rolling member loops, said subcarrier (1633) further having prismatic side faces (1633f, 1633g) for being supported on respective supporting faces of a main body (18a), said rolling member tracks (1620a1, 1620a2) and said prismatic side faces (1633f, 1633g) being shaped such that, when viewed in a plane orthogonal with respect to the moving direction, the resulting force transmission direction (R) of a rolling member track (1622a1) defines together with a prismatic side face (1633g) allocated to the rolling member track (1622a1) in terms of force transmission an angle δ, said angle δ being larger than 90°, more preferably larger than 120° and most preferably larger than 150°,
and that in case of a guiding rail runner element (16) the load transmitting rolling member rows (1620a1, 1620a2) of mutually adjacent rolling member loops are in engagement with tracks directly shaped on a respective main body (16a) or in engagement with tracks (1622a1, 1622a2) of a common prismatic subcarrier (1632), said rolling member tracks (1622a1, 1622a2) and said prismatic side faces (1632f, 1632g) being located and shaped such with respect to each other on said prismatic subcarrier that, when viewed in a sectional plane orthogonal with respect to said moving direction, a resulting force transmission direction (R) through one (1622a1) of the rolling member tracks defines an angle of approximately 90° with a prismatic side face (1632g) which is allocated to said rolling member track (1622a1) in terms of force transmission to the main body (16a).

45. The linear guiding apparatus of anyone of claims 1 to 44, characterized in that the difference between a guiding rail runner element (16) and a damping rail runner element (18) is partly owing to the fact that the rolling members (20a1, 20a2) of said guiding rail runner element (16) and the rolling members (120a1, 120a2) of said damping rail runner element (18) define in a cross-section orthogonal to the moving direction different engagement geometries with associated tracks (22a1, 22a2; 122a1, 122a2 resp.) of the respective rail runner element (16 or 18, resp.).

46. The linear guiding apparatus of claim 45, characterized in that, when viewed in a cross-section orthogonal to the moving direction, the rolling members (120a1, 120a2) of a damping rail runner element (18) are capable of a larger frictional or/and a rolling displacement along a line of contact on the profile of an allocated track (122a1, 122a2) as compared with the rolling members (20a1, 20a2) of a guiding rail runner element (16).

47. The linear guiding apparatus of claim 46, chacterized in that said rolling members (20a1, 20a2; 120a1, 120a2, resp.) are balls and that said rows of transverse load transmitting balls are guided on the associated rail runner elements (16; 18 resp.) in a track (22a1, 22a2; 122a1, 122a2, resp.) which has an approximately circular profile in a cross-section orthogonal with respect to the moving direction, and that said circular profile of said track (22a1; 22a2) on a guiding rail runner element (16) has a smaller radius than the circular profile of said track (122a1, 122a2) on a damping rail runner element (18).

48. The linear guiding apparatus of anyone of claims 1 to 47, characterized in that the difference between a guiding rail runner element (16) and a damping rail runner element (18) is at least partly owing to the fact that said rolling members (20a1, 20a2) of said guiding rail runner element (16) and said rolling members (120a1, 120a2) of said damping rail runner element (18) differ from one another at least in regard of one of the following criteria: geometry, material selection, hardness.

49. The linear guiding apparatus of anyone of claims 1 to 48, characterized in that the difference between a guiding rail runner element (16) and a damping rail runner element (18) is at least partly owing to the fact that the rolling members (20a1, 20a2) of said guiding rail runner element (16) are clamped between an associated roller path (14a1, 14a2) of said rail system (12) and an associated track (22a1, 22a2) of said guiding rail runner element (16) under greater prestress than said rolling members (120a1, 120a2) of said damping rail runner element (18) between the associated roller path (14a1, 14a2) of said rail system (12) and an associated track (122a1, 122a2) of said damping rail runner element (18).

50. The linear guiding apparatus of anyone of claims 1 to 49, characterized in that the difference between a guiding rail runner element (16) and a damping rail runner element (18) is at least partly owing to the fact that the rows of transverse load transmitting rolling members (20a1, 20a2) of said guiding rail runner element (16) are in engagement with a track (22a1, 22a2) of said guiding rail runner element (16), which track exhibits a higher surface hardness than the corresponding track (122a1, 122a2) of a damping rail runner element (18).

51. The linear guiding apparatus of anyone of claims 1 to 50, characterized in that a rail runner element (16, 18) has a substantially U-shaped cross-section and is with one web (16b) and two legs (16c, 16d) located opposite to respective profile side faces of a profiled rail (12a) of said rail system (12).

52. The linear guiding apparatus of anyone of claims 1 to 51, characterized in that said object (30) is guided on at least one rail (12a, 12b) of said rail system (12) by guiding and damping rail runner elements (16, 18) arranged in series.

53. The linear guiding apparatus of claim 52, characterized in that said guiding and said damping rail runner elements (16, 18) are approximately symmetrically distributed within said series arrangement with respect to a longitudinal midpoint of said series arrangement.

54. The linear guiding apparatus of claim 53, characterized in that said series arrangement (16, 18, 16) comprises a middle damping rail runner element (18) and two terminal guiding rail runner elements (16, 16).

55. The linear guiding apparatus of claim 53, characterized in that said series arrangement comprises a middle guiding rail runner element and two terminal damping rail runner elements.

56. The linear guiding apparatus of anyone of claims 52 to 55, characterized in that said object is guided on a plurality of preferably substantially parallel rails (12a, 12b) by guiding and damping rail runner elements (16, 18).

57. The linear guiding apparatus of anyone of claims 1 to 56, characterized in that said rail runner elements (16, 18), namely both the guiding rail runner elements (16) as well as the damping rail runner elements (18) are at least partly free of frictional contact with said rail system (12).

## Revendications

1. Dispositif de guidage linéaire pour le guidage d'un objet (30), comportant un système de rails (12) et un premier groupe partiel - comprenant au moins un élément de groupe - d'éléments de roulement sur rail (16), guidant l'objet, responsables principalement de la précision de guidage de l'objet - dénommés ci-après éléments de roulement sur rail (16) de guidage -, qui sont guidés dans un sens de déplacement sur des voies de roulement (14a1, 14a2) qui leur sont affectées du système de rails (12), par des boucles de corps de roulement (20a, 20b), montées sur les éléments de roulement sur rail (16) de guidage,
dans lequel entre l'objet (30) et le système de rails (12) est prévu en outre un deuxième groupe partiel - comprenant au moins un élément de groupe - d'éléments d'amortissement (18) guidés sur le système de rails (12) et reliés à l'objet (30), destinés principalement à l'amortissement d'oscillations dirigées transversalement au sens de déplacement, qui sont différents des éléments de roulement sur rail de guidage en ce qui concerne la structure interne et/ou les conditions de montage entre l'objet (30) et le système de rails (12),
caractérisé
a) en ce qu'au moins un élément d'amortissement (18) - dénommé ci-après élément de roulement sur rail (18) d'amortissement - est guidé également, par des boucles de corps de roulement (120a, 120b), montées sur celui-ci, sur des voies de roulement (14a1, 14a2) du système de rails (12), qui sont affectées aussi au premier groupe partiel d'éléments de roulement sur rail (16) de guidage et
b) en ce que les propriétés d'amortissement de cet élément de roulement sur rail (18) d'amortissement sont déterminées par des moyens de transmission des forces transversales, qui sont placés dans le parcours de transmission des forces transversales entre les corps de roulement (120a1, 120a2) de l'élément de roulement sur rail (18) d'amortissement respectif et l'objet (30).

2. Dispositif de guidage linéaire selon la revendication 1,
caractérisé
en ce que des moyens de liaison transmettant les forces transversales (boulons situés en 128, 18a, 132, 120a1, 120a2), entre l'objet (30) et le système de rails (12), dans un plan transversal orthogonal à la direction de déplacement, considéré dans la zone d'un élément de roulement sur rail (18) d'amortissement, sont plus souples à la déformation que des moyens de liaison transmettant les forces transversales (boulons situés en 28, 16a, 20a1, 20a2) entre l'objet (30) et le système de rails (12), dans un plan orthogonal à la direction de déplacement, dans la zone d'un élément de roulement sur rail (16) de guidage.

3. Dispositif de guidage linéaire selon la revendication 1 ou 2, caractérisé
en ce que des moyens de liaison transmettant les forces transversales (128, 18a, 132, 120a1, 120a2) entre l'objet (30) et le système de rails (12), dans un plan transversal orthogonal à la direction de déplacement, dans la zone d'un élément de roulement sur rail (18) d'amortissement, présentent, après excitation en oscillation transversale, par un signal d'excitation défini, une chute d'amplitude d'oscillation plus rapide que des moyens de liaison transmettant les forces transversales (28, 16a, 20a1, 20a2), entre l'objet (30) et le système de rails (12), dans un plan transversal orthogonal à la direction de déplacement, dans la zone d'un élément de roulement sur rail (16) de guidage.

4. Dispositif de guidage linéaire selon l'une des revendications 1 à 3,
caractérisé
en ce que des moyens de liaison transmettant les forces (128, 18a, 132, 120a1, 120a2), entre l'objet (30) et le système de rails (12), dans un plan transversal orthogonal à la direction de déplacement, dans la zone d'un élément de roulement sur rail (18) d'amortissement, possèdent une autre fréquence de résonance que des moyens de liaison transmettant les forces transversales (28, 16a, 20a1, 20a2), entre l'objet (30) et le système de rails (12), dans un plan transversal orthogonal à la direction de déplacement, dans la zone d'un élément de roulement sur rail (16) de guidage.

5. Dispositif de guidage linéaire selon l'une des revendications 1 à 4,
caractérisé
en ce qu'au moins un élément de roulement sur rail (16) de guidage et au moins un élément de roulement sur rail (18) d'amortissement sont placés chaque fois individuellement entre l'objet (30) et le système de rails (12) et sont reliés à l'objet (30).

6. Dispositif de guidage linéaire selon l'une des revendications 1 à 4,
caractérisé
en ce qu'au moins un élément de roulement sur rail (16) de guidage est directement relié à l'objet (30) et au moins un élément de roulement sur rail (18) d'amortissement est relié avec chaque fois au moins un élément de roulement sur rail (16) de guidage.

7. Dispositif de guidage linéaire selon l'une des revendications 1 à 6,
caractérisé
en ce que toutes les voies de roulement (14a1, 14a2) du système de rails (12) sont occupées par des corps de roulement (20a1, 20a2) d'au moins un élément de roulement sur rail (16) de guidage ainsi qu'avec des corps de roulement (120a1, 120a2) d'au moins un élément de roulement sur rail (18) d'amortissement.

8. Dispositif de guidage linéaire selon l'une des revendications 1 à 5 et 7,
caractérisé
en ce que la différence entre un élément de roulement sur rail (16) de guidage et un élément de roulement sur rail (18) d'amortissement tient au moins en partie au type de liaison entre l'élément de roulement sur rail (16, 18) respectif et l'objet (30).

9. Dispositif de guidage linéaire selon la revendication 8,
caractérisé
en ce qu'entre un élément de roulement sur rail (18) d'amortissement et l'objet (30) est placée au moins une couche intermédiaire (234) amortissant les oscillations transversales et en ce que dans la liaison entre l'élément de roulement sur rail (16) de guidage et l'objet (30), une telle couche intermédiaire manque ou - lorsqu'elle est présente - elle est réalisée avec d'autres propriétés élastiques ou/et propriétés d'amortissement.

10. Dispositif de guidage linéaire selon la revendication 9,
caractérisé
en ce qu'en supplément à la couche intermédiaire (857) amortissant les oscillations transversales sont prévus, entre l'élément de roulement sur rail (18) d'amortissement et l'objet (30), des moyens d'espacement (858), qui sont plus rigides que la couche intermédiaire (857) amortissant les oscillations transversales.

11. Dispositif de guidage linéaire selon la revendication 9 ou 10,
caractérisé
en ce qu'une couche intermédiaire (234) amortissant les oscillations transversales est formée entre un élément de roulement sur rail (18) d'amortissement et l'objet (30), sous forme de couche adhésive.

12. Dispositif de guidage linéaire selon la revendication 11,
caractérisé
en ce que la couche adhésive (234) est une couche de colle.

13. Dispositif de guidage linéaire selon l'une des revendications 8 à 12,
caractérisé
en ce que la couche intermédiaire (434) amortissant les oscillations transversales est conformée en couche intermédiaire transmettant le force de compression, qui s'applique contre des surfaces d'application (238, 240) de l'élément de roulement sur rail (18) d'amortissement et de l'objet (30).

14. Dispositif de guidage linéaire selon la revendication 13,
caractérisé
en ce que la couche intermédiaire (434) transmettant la force de compression est maintenue sous une précontrainte de compression, entre les surfaces d'application de l'objet (30) et de l'élément de roulement sur rail (18) d'amortissement.

15. Dispositif de guidage linéaire selon la revendication 14,
caractérisé
en ce que les surfaces d'application de l'objet (30) et de l'élément de roulement sur rail (18) d'amortissement sont serrées entre elles jusqu'à la butée de moyens d'espacement (858) respectifs, entre l'objet (30) et l'élément de roulement sur rail (18) d'amortissement.

16. Dispositif de guidage linéaire selon l'une des revendications 9 à 15,
caractérisé
en ce que la couche intermédiaire (234) est faite d'un matériau élastomère, en particulier d'un matériau élastique du type caoutchouc ou d'une matière plastique.

17. Dispositif de guidage linéaire selon l'une des revendications 9 à 15,
caractérisé
en ce que la couche intermédiaire (à l'intérieur de 754) est constituée d'un liquide, en particulier d'une huile très visqueuse.

18. Dispositif de guidage linéaire selon la revendication 17,
caractérisé
en ce que la couche intermédiaire (à l'intérieur de 754) constituée d'un liquide est limitée dans son extension en surface par des moyens de délimitation de bord de couche (755).

19. Dispositif de guidage linéaire selon la revendication 18,
caractérisé
en ce que les moyens de délimitation de bord de couche comprennent des moyens d'étanchéité (755), en particulier des moyens d'étanchéité annulaires.

20. Dispositif de guidage linéaire selon la revendication 19,
caractérisé
en ce que les moyens d'étanchéité (755) sont élastiques ou plastiques et élastiques et sont positionnés par des moyens de positionnement (754) de l'objet ou/et de l'élément de roulement sur rail (18) d'amortissement, dans une position d'étanchéité.

21. Dispositif de guidage linéaire selon l'une des revendications 9 à 16,
caractérisé
en ce que la couche intermédiaire (1434) d'amortissement comprend des chambres de liquide (1493, 1495), dont les volumes peuvent varier en sens contraire par des oscillations dans un plan orthogonal à la direction de déplacement et en ce que ces chambres de liquide (1493, 1495) sont reliées entre elles par au moins un canal d'amortissement (1497).

22. Dispositif de guidage linéaire selon la revendication 21,
caractérisé
en ce que les chambres de liquide (1493, 1495) sont formées par des évidements de la couche d'amortissement (1434), à la limite de surfaces d'application d'un élément de roulement sur rail (18) d'amortissement et d'un objet (30).

23. Dispositif de guidage linéaire selon la revendication 8,
caractérisé
en ce qu'un élément de roulement sur rail (18) d'amortissement est relié à l'objet (30), par friction, dans au moins un plan (1587;18s) orthogonal à la direction de déplacement.

24. Dispositif de guidage linéaire selon la revendication 23,
caractérisé
en ce que l'élément de roulement sur rail (18) d'amortissement est serré dans la direction de déplacement entre deux corps de serrage (1591), qui de leur côté sont fixés sur l'objet (30).

25. Dispositif de guidage linéaire selon l'une des revendications 1 à 24,
caractérisé
en ce que la différence entre l'élément de roulement sur rail (18) d'amortissement et l'élément de roulement sur rail (16) de guidage tient au moins en partie à la différence de matériau d'un corps de base (18a) de l'élément de roulement sur rail (18) d'amortissement et d'un corps de base (16a) d'un élément de roulement sur rail (16) de guidage.

26. Dispositif de guidage linéaire selon la revendication 25,
caractérisé
en ce que le matériau du corps de base (18a) de l'élément de roulement sur rail (18) d'amortissement et le matériau du corps de base (16a) de l'élément de roulement sur rail (16) de guidage diffèrent l'un de l'autre par un module d'élasticité différent, le module d'élasticité étant plus grand dans le cas de l'élément de roulement sur rail (16) de guidage.

27. Dispositif de guidage linéaire selon la revendication 26,
caractérisé
en ce que le matériau du corps de base (16a) de l'élément de roulement sur rail (16) de guidage est de l'acier et le matériau du corps de base (18a) de l'élément de roulement sur rail (18) d'amortissement est choisi dans le groupe des métaux légers et des matières synthétiques élastiques dures.

28. Dispositif de guidage linéaire selon l'une des revendications 1 à 27,
caractérisé
en ce que la différence entre un élément de roulement sur rail (16) de guidage et un élément de roulement sur rail (18) d'amortissement tient au moins en partie à la différence de la forme de la section transversale ou/et des dimensions de la section transversale d'un corps de base (16a) de l'élément de roulement sur rail (16) de guidage et d'un corps de base (18a) de l'élément de roulement sur rail (18) d'amortissement, la forme de la section transversale étant considérée chaque fois dans une plan orthogonal à la direction de déplacement.

29. Dispositif de guidage linéaire selon l'une des revendications 1 à 28,
caractérisé
en ce qu'un corps de base (18a) de l'élément de roulement sur rail (18) d'amortissement est pourvu d'au moins une fente (1164) réduisant la rigidité, s'étendant sensiblement dans la direction de déplacement et en ce que dans le corps de base (16a) d'un élément de roulement sur rail (16) de guidage une fente correspondante soit n'est pas présente, soit - lorsqu'elle est présente - est dimensionnée ou/et est remplie ou/et est remplie autrement.

30. Dispositif de guidage linéaire selon la revendication 29,
caractérisé
en ce qu'au moins une fente (1164) réduisant la rigidité du corps de base (18a) d'un élément de roulement sur rail (18) d'amortissement contient une masse de remplissage influençant l'élasticité ou/et les propriétés d'amortissement du corps de base (18a).

31. Dispositif de guidage linéaire selon l'une des revendications 29 et 30,
caractérisé
en ce qu'au moins une fente (1164) du corps de base (18a) de l'élément de roulement sur rail (18) d'amortissement s'étend sur toute la longueur de ce corps de base (18a), dans la direction de déplacement.

32. Dispositif de guidage linéaire selon l'une des revendications 1 à 31,
caractérisé
en ce que la différence entre un élément de roulement sur rail (16) de guidage et un élément de roulement sur rail (18) d'amortissement tient au moins en partie à la différence de l'appui d'une rangée de corps de roulement (20al, 20a2) transmettant les forces transversales sur un corps de base (16a) de l'élément de roulement sur rail (16) de guidage et de l'appui d'une rangée de corps de roulement (120a1, 120a2), transmettant les forces transversales, sur un corps de base (18a) de l'élément de roulement sur rail (18) d'amortissement.

33. Dispositif de guidage linéaire selon la revendication 32,
caractérisé
en ce que la différence de l'appui tient au moins en partie en ce que dans le cas d'un élément de roulement sur rail (16) de guidage, la rangée de corps de roulement (20a1, 20a2) transmettant les forces transversales passe sur une voie de roulement (22a1, 22a2) formée directement sur le corps de base (16a), tandis que dans le cas d'un élément de roulement sur rail (18) d'amortissement, la rangée de corps de roulement (120a1, 120a2) transmettant les forces transversales passe sur un support intermédiaire (132), qui de son côté prend appui contre le corps de base (18a).

34. Dispositif de guidage linéaire selon la revendication 33,
caractérisé
en ce que le corps de base (16a) de l'élément de roulement sur rail (16) de guidage possède un matériau avec une souplesse de déformation plus faible ou/et un temps d'atténuation de l'amplitude d'oscillation plus long que le corps de base (18a) de l'élément de roulement sur rail (18) d'amortissement.

35. Dispositif de guidage linéaire selon l'une des revendications 33 et 34,
caractérisé
en ce que le support intermédiaire (132) est susceptible d'exécuter, sous l'influence d'oscillations, un microdéplacement de friction par rapport au corps de base (18a) respectif.

36. Dispositif de guidage linéaire selon l'une des revendications 34 à 35,
caractérisé
en ce que le support intermédiaire (932) prend appui contre le corps de base (18a) respectif, par l'intermédiaire d'au moins une couche de séparation (963) amortissant les oscillations transversales.

37. Dispositif de guidage linéaire selon la revendication 36,
caractérisé
en ce qu'entre le corps de base (18a) et le support intermédiaire (932) sont prévus, en supplément de la couche de séparation (963) amortissant les oscillations transversales, des moyens d'espacement (965), qui sont plus rigides que la couche de séparation (963).

38. Dispositif de guidage linéaire selon l'une des revendications 36 et 37,
caractérisé
en ce que la couche de séparation (963) est logée dans une poche (962) d'une surface d'application du support intermédiaire (932) ou du corps de base (18a).

39. Dispositif de guidage linéaire selon l'une des revendications 36 à 38,
caractérisé
en ce que la couche de séparation (963) est constituée d'un matériau présentant l'élasticité du caoutchouc ou d'une matière plastique.

40. Dispositif de guidage linéaire selon l'une des revendications 36 à 39,
caractérisé
en ce que la poche (962) est ouverte à ses extrémités espacées dans la direction de déplacement.

41. Dispositif de guidage linéaire selon l'une des revendications 36 à 39,
caractérisé
en ce que la poche (962) est fermée le long d'un bord périphérique de la couche de séparation (963).

42. Dispositif de guidage linéaire selon l'une des revendications 36 à 41,
caractérisé
en ce que la couche de séparation (963) se trouve sous une précontrainte de compression.

43. Dispositif de guidage linéaire selon l'une des revendications 37 à 42,
caractérisé
en ce que la couche de séparation (963) se trouve sous une précontrainte de compression telle que des moyens d'espacement (965) respectifs du support intermédiaire (932) et du corps de base (18a) se trouvent en coopération.

44. Dispositif de guidage linéaire selon la revendication 32,
caractérisé
en ce que la différence entre un élément de roulement sur rail (16) de guidage et un élément de roulement sur rail (18) d'amortissement repose au moins en partie sur le fait que dans le cas d'un élément de roulement sur rail (18) d'amortissement, un support intermédiaire (1633) prismatique, commun, avec une voie de roulement de corps de roulement (1620a1, 1620a2) pour des rangées de corps de roulement (1620a1, 1620a2), transmettant la charge, de boucles de corps de roulement voisines et avec des faces latérales (1633f, 1633g) prismatiques, pour l'appui contre des surfaces d'appui correspondantes d'un corps de base (18a), est formé de manière que, considérée dans un plan orthogonal à la direction de roulement, la résultante de transmission des forces (R), faisant partie d'une voie de roulement de corps de roulement (1622a1), forme, avec une face latérale de prisme (1633g) correspondante, dans le sens de la transmission des forces au corps de base (18a), un angle obtus δ, qui est supérieur à 90°, en particulier supérieur à 120° et de préférence supérieur à 150°, tandis que dans le cas d'un élément de roulement (16) de guidage, les rangées de corps de roulement (1620a1, 1620a2) transmettant la charge, de boucles de corps de roulement voisines, s'appliquent soit contre des voies de roulement, qui sont formées directement sur le corps de base (16a) correspondant, soit contre des voies de roulement (1622a1, 1622a2) d'un support intermédiaire (1632) prismatique commun, sur ce support intermédiaire (1632) prismatique, les voies de roulement de corps de roulement (1622a1, 1622a2) et les faces latérales de prisme (1632f, 1632g) étant formées de manière que, considérée dans une coupe orthogonale à la direction de roulement, la résultante de transmission des forces (R), faisant partie d'une voie de roulement de corps de roulement (1622a1), forme un angle sensiblement de 90°, avec une face latérale de prisme (1632g) correspondante, dans le sens de la transmission des forces au corps de base (16a).

45. Dispositif de guidage linéaire selon l'une des revendications 1 à 44,
caractérisé
en ce que la différence entre un élément de roulement sur rail (16a) de guidage et un élément de roulement sur rail (18) d'amortissement tient en partie au fait que les corps de roulement (20a1, 20a2) de l'élément de roulement sur rail (16) de guidage et les corps de roulement (120a1, 120a2) de l'élément de roulement sur rail (18) d'amortissement, forment dans une coupe transversale, orthogonalement à la direction de déplacement, avec des voies de roulement (22a1, 22a2) ou (122a1, 122a2) correspondantes de l'élément de roulement sur rail (16) ou (18) respectif, des géométries de contact différentes.

46. Dispositif de guidage linéaire selon la revendication 45,
caractérisé
en ce que les corps de roulement (120a1, 120a2) d'un élément de roulement sur rail (18) d'amortissement sont susceptibles d'exécuter, dans une coupe transversale orthogonale à la direction de déplacement, le long d'une ligne de contact avec un profilé d'une voie de roulement (122a1, 122a2) correspondante, un mouvement de friction ou/et de roulement, dans une plus grande mesure que les corps de roulement (20a1, 20a2) d'un élément de roulement sur rail (16) de guidage.

47. Dispositif de guidage linéaire selon la revendication 46,
caractérisé
en ce que les corps de roulement (20a1, 20a2 ou 120a1, 120a2) sont formés par des billes et les rangées de billes transmettant les forces transversales sont guidées sur les éléments de roulement sur rail (16 ou 18) correspondants, dans une voie de roulement (22a1, 22a2 ou 122a1, 122a2), qui présente sensiblement un profil en arc de cercle, dans une section transversale orthogonale à la direction de déplacement, et en ce que le profil en arc de cercle de la voie de roulement (22a1, 22a2), sur un élément de roulement sur rail (16) de guidage, possède un plus petit rayon que le profil en arc de cercle de la voie de roulement (122a1, 122a2), sur un élément de roulement sur rail (18) d'amortissement.

48. Dispositif de guidage linéaire selon l'une des revendications 1 à 47,
caractérisé
en ce que la différence entre un élément de roulement sur rail (16) de guidage et un élément de roulement sur rail (18) d'amortissement tient au moins en partie au fait que les corps de roulement (20a1, 20a2) de l'élément de roulement sur rail (16) de guidage et les corps de roulement (120a1, 120a2) de l'élément de roulement sur rail (18) d'amortissement sont différents en ce qui concerne au moins l'un des critères : géométrie, choix du matériau, dureté.

49. Dispositif de guidage linéaire selon l'une des revendications 1 à 48,
caractérisé
en ce que la différence entre un élément de roulement sur rail (16) de guidage et un élément de roulement sur rail (18) d'amortissement tient au moins en partie au fait que les corps de roulement (20a1, 20a2) de l'élément de roulement sur rail (16) de guidage sont serrés avec un plus grande précontrainte, entre une voie de roulement (14a1, 14a2) correspondante du système de rails (12) et une voie de circulation (22a1, 22a2) correspondante de l'élément de roulement sur rail (16) de guidage, que les corps de roulement (120a1, 120a2) de l'élément de roulement sur rail (18) d'amortissement, entre la voie de roulement (14a1, 14a2) correspondante du système de rails (12) et une voie de circulation (122a1, 122a2) correspondante de l'élément de roulement sur rail (18) d'amortissement.

50. Dispositif de guidage linéaire selon l'une des revendications 1 à 49,
caractérisé
en ce que la différence entre un élément de roulement sur rail (16) de guidage et un élément de roulement sur rail (18) d'amortissement, tient au moins en partie au fait que les rangées de corps de roulement (20a1, 20a2) transmettant les forces transversales de l'élément de roulement sur rail (16) de guidage sont en contact avec une voie de circulation (22a1, 22a2) de l'élément de roulement sur rail (16) de guidage, qui possède une plus grande dureté de surface que la voie de circulation (122a1, 122a2) correspondante d'un élément de roulement sur rail (18) d'amortissement.

51. Dispositif de guidage linéaire selon l'une des revendications 1 à 50,
caractérisé
en ce qu'un élément de roulement sur rail (16, 18) présente une section transversale sensiblement en U et fait face, avec un dos (16b) et deux branches (16c, 16d), à une face latérale profilée respective d'un rail profilé (12a) du système de rails (12).

52. Dispositif de guidage linéaire selon l'une des revendications 1 à 51,
caractérisé
en ce que l'objet (30) est guidé sur au moins un rail (12a, 12b) du système de rails (12) par des éléments de roulement sur rail (16, 18) de guidage et d'amortissement, disposés en une rangée.

53. Dispositif de guidage linéaire selon la revendication 52,
caractérisé
en ce que les éléments de roulement sur rail (16, 18) de guidage et d'amortissement sont répartis à l'intérieur de la rangée, approximativement symétriquement par rapport au milieu longitudinal de la rangée.

54. Dispositif de guidage linéaire selon la revendication 53,
caractérisé
en ce que la rangée (16, 18, 16) comprend un élément de roulement sur rail (18) d'amortissement central et deux éléments de roulement sur rail (16, 16) de guidage adjacents à celui-ci.

55. Dispositif de guidage linéaire selon la revendication 53,
caractérisé
en ce que la rangée comprend un élément de roulement sur rail de guidage central et deux éléments de roulement sur rail d'amortissement adjacents à celui-ci.

56. Dispositif de guidage linéaire selon l'une des revendications 52 à 55,
caractérisé
en ce que l'objet est guidé sur plusieurs rails (12a, 12b) de préférence sensiblement parallèles entre eux, par des éléments de roulement sur rail (16, 18) de guidage et d'amortissement.

57. Dispositif de guidage linéaire selon l'une des revendications 1 à 56,
caractérisé
en ce que les éléments de roulement sur rail (16, 18), à savoir aussi bien les éléments de roulement sur rail (16) de guidage que les éléments de roulement sur rail (18) d'amortissement, sont au moins en partie exempts d'un contact de friction avec le système de rails (12).
